(19) Europäisches Patentamt
European Patent Office
Office européen des brevets

(11) **EP 3 194 177 B1**

(12) **EUROPEAN PATENT SPECIFICATION**

(45) Date of publication and mention
of the grant of the patent:
**27.05.2020 Bulletin 2020/22**

(21) Application number: **15763033.6**

(22) Date of filing: **16.09.2015**

(51) Int Cl.:
**B42D 15/00** (2006.01)   **C09D 11/02** (2014.01)
**C09D 11/32** (2014.01)   **C09D 11/328** (2014.01)
**G07D 7/06** (2006.01)   **G07D 7/12** (2016.01)
**C09D 11/40** (2014.01)   **C09D 11/50** (2014.01)

(86) International application number:
**PCT/EP2015/071213**

(87) International publication number:
**WO 2016/042025 (24.03.2016 Gazette 2016/12)**

(54) **PRINTING INK, ITS USE FOR THE AUTHENTICATION OF ARTICLES, ARTICLES OBTAINED THEREBY AND AUTHENTICATION METHODS**

TINTE ZUM DRUCKEN, IHRE VERWENDUNG ZUR AUTHENTIFIZIERUNG VON ARTIKELN, DIE DABEI ERHALTENEN ARTIKEL UND AUTHENTIFIZIERUNGSVERFAHREN

ENCRE D'IMPRESSION, SON UTILISATION POUR L'AUTHENTIFICATION DES ARTICLES, DES ARTICLES OBTENUS ET LES PROCÉDÉS D'AUTHENTIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2014 EP 14184924**

(43) Date of publication of application:
**26.07.2017 Bulletin 2017/30**

(73) Proprietor: **Sicpa Holding SA**
**1008 Prilly (CH)**

(72) Inventors:
• **SEMPERE, Pablo**
 **F-01710 Thoiry (FR)**
• **DORIER, Jean-Luc**
 **CH-1030 Bussigny (CH)**
• **ZAHAR, Amine**
 **75116 Paris (FR)**
• **CARTESIO, Salvatore**
 **CH-1018 Lausanne (CH)**

(74) Representative: **Carvajal y Urquijo, Isabel et al**
**Clarke, Modet & Co.**
**Suero de Quiñones, 34-36**
**28002 Madrid (ES)**

(56) References cited:
**EP-A1- 1 266 941      WO-A1-02/092707**
**JP-A- 2006 249 355      US-A1- 2004 231 554**
**US-A1- 2005 120 907      US-A1- 2006 234 018**
**US-B1- 7 079 230**

**Description**

The present invention concerns printing ink comprising two fluorescents dyes whereof one ("the donor") is capable of exciting the other ("the acceptor") resulting in a cascade effect in terms of energy transfer. The present invention also relates to the use of this printing ink for authenticating articles, such as banknotes, value papers, identity documents, cards, tickets, labels, security foils, security threads and the like, articles being printed with printing inks, and a method for the authentication of such articles.

**1. Background art**

The authentication of luminescent, in particular fluorescent, markers with imaging devices is commonly done by imaging/observing the authentication mark in a certain spectral range (typically different from the range of excitation), followed by verifying that the authentication mark luminesces and presents a proper contrast against the background. This technique is, however, only suited to validate the luminescence emission of the marking dye, and does so in a relatively broad wavelength range.

This technique has the drawback that the emission spectra of markers (e.g. fluorescent dyes and pigments) are often known, or can be relatively easy determined. The fluorescence emission of a marking dye in a broader wavelength range can therefore be fairly easily simulated by a counterfeiter by using one or more fluorescent dyes having similar emission properties, thereby mimicking the genuine marker. Therefore, in terms of authentication, this method is not very reliable, since other marking dyes emitting in a similar range (even if not identical) may provide contrast enough to be considered as genuine.

A more reliable authentication of luminescent marks with imaging devices can be achieved by exploiting the spectral properties of the emitted light, i.e. by analyzing the emission spectrum in the visible spectrum or in other spectral ranges, such as UV and IR. With a standard imaging sensor, doing multi (or hyper) spectral imaging on the NIR (near infrared range) range would, however, require either: (1) custom Bayer-like filters (involving expensive developments), or (2) Fabry-Perot configurations (which are not yet compact enough and also fairly expensive) or (3) complex cameras using AOTF (Acousto-Optic Tunable Filters), which are also bulky and expensive or (4) tunable band-pass interference filters (with the disadvantage of having movable parts), or (5) imaging spectrograph requiring push-broom (which is not suitable for handheld readers). Examining the spectral properties thus generally requires complex, bulky and expensive equipment, and is thus difficult to implement in handheld devices or widely distributed authentication equipment.

Another means to achieve a more reliable authentication is using spectrometers. However, such a kind of device does not provide an image of the mark, therefore is not compatible with code verification or geometrical checks on the printed mark.

US 7,079,230 B2 relates to authentication devices and methods and, more particularly, to portable hand-held device and a method for authenticating products or product packaging. In one embodiment of this patent document, a method of selecting a light-sensitive compound for application to a substrate and subsequent detection on the substrate is disclosed. The method includes irradiating the substrate with light, sensing an emission spectrum of the substrate in response to the irradiation, determining at least one peak wavelength of light within the emission spectrum, and selecting a light-sensitive compound that emits or absorbs light at a first wavelength in response to the irradiating light wherein the first wavelength is different from the at least one peak wavelength. In another embodiment, a method of authentication is described which includes producing an ink containing a first compound that emits light at a first discreet wavelength and a second compound that emits light at a second discreet wavelength, printing a readable image on a substrate with the ink, detecting a ratio of the first compound with the second compound on the substrate, indicating whether the ratio is within a range and reading the image. In one embodiment, one or more light-sensitive compounds, such as, for example, one or more fluorescent light-emissive compounds, is mixed with ink to be printed on a product or a product package. The system of this reference document requires the measurement of at least two different emission peaks and consequently requires a measuring device that contains two separate detectors, one for each emission peak.

WO 2013/050290 A1 describes a method for the automatic examination of the authenticity of value-indicating stamps and indicia comprising a luminescent area, the stamp or indicium being applied to the surface of a mail item. The surface of the item is irradiated with light of a wavelength of spectral range, a first image of the surface of the item is recorded by means of a camera system and said first image is evaluated with respect to the location of stamps or indicia applied thereto on the surface of the item. A comparison of evaluation of the image sections or image sections with stored luminescence patterns will lead, when these match, to a decision on the authenticity of every stamp or indicium.

US 2005/120907 A1 discloses a fluorescent water base ink for ink-jet recording containing a first fluorescent dye and a second fluorescent dye. The first fluorescent dye has a first ultraviolet absorption wavelength region in an absorption spectrum and a first fluorescence emission wavelength region in a fluorescence spectrum. The second fluorescent dye has a second ultraviolet absorption wavelength region which is different from the first ultraviolet absorption wavelength region in an absorption spectrum and a second fluorescence emission wavelength region in a fluorescence spectrum. The first fluorescent dye further has an absorption wavelength region which is different from the first ultraviolet absorption wavelength region and which overlaps at least a part of the second fluorescence emission wavelength region.

## 2. Problems to be solved by the present invention

The emission spectra of commercially available markers (dyes or pigments) are typically well known and furthermore can be easily measured if a counterfeiter has already realized that markers have been used to protect the authenticity of an article. Even if two or more dyes or pigments have been used in combination, counterfeiters may purchase these and prepare a corresponding mixture thereof, in order to mimic the security mark of an article.

Therefore, the present invention aims at developing new printing inks and authentication methods that require more complex analysis and are more difficult to mimic by counterfeiters.

Further, it would be advantageous if the new authentication method allows as well the printing of fine designs such as logos and images obtainable by printing inks, but hardly accessible with other methods.

In some embodiments, the present invention further aims at providing printing inks and authentication marks produced therewith that can easily be altered or tailored once a prior printing ink or security mark has been stolen, compromised or successfully reproduced by a counterfeiter. In one specific embodiment of this aspect, the altered or tailored ink and the security mark produced therewith has substantially the same appearance to the unaided eye as the stolen, compromised or successfully reproduced security mark, with the alteration or tailoring being detectable only with technical equipment, such as spectral analyzers and/or under certain non-daylight viewing conditions.

In some embodiments, the present invention aims at providing inks and an authenticating mark obtained therefrom that can be utilized for authenticating an article by measuring emission responses or intensities at a single wavelength or within one single wavelength range, the emission response or intensities being dependent not only on the nature but also on the exact composition and concentration of the components in the ink or authentication mark.

## 3. Summary of the Invention

The present invention solves these problems by the combined use of two specifically selected fluorescent dyes (donor and acceptor) capable of transferring energy from the donor to the acceptor, i.e. by a fluorescence cascade effect, and an excitation-based authentication method.

The present invention accordingly provides:

1. Printing ink comprising a first fluorescent dye acting as donor and a second fluorescent dye acting as acceptor,

wherein said first fluorescent dye, upon excitation by electromagnetic radiation falling within an excitation wavelength range $\lambda_{1a}$ of the first fluorescent dye, is capable of emitting electromagnetic radiation in at least one first emission wavelength range $\lambda_{1e}$, said first emission wavelength range $\lambda_{1e}$ of the first fluorescent dye overlapping with at least one excitation wavelength range $\lambda_{2a}$ of the second fluorescent dye, to thereby excite the second fluorescent dye to emit electromagnetic radiation in a second emission wavelength range $\lambda_{2e}$, wherein $\lambda_{1a\text{-}max} < \lambda_{1e\text{-}max} < \lambda_{2a\text{-}max} < \lambda_{2e\text{-}max}$, wherein $\lambda_{1a\text{-}max}$ $\lambda_{1e\text{-}max}$, $\lambda_{2a\text{-}max}$, and $\lambda_{2e\text{-}max}$ denote the wavelengths of the excitation and emission peaks in the respective excitation and emission wavelength ranges of the first and second fluorescent dye,

wherein the first fluorescent dye acting as a donor is present in a relative concentration C1, expressed as (mass of first dye/(total mass of first dye and second dye)), that satisfies formula (A) and/or (B)

$$(ABS(R_{(C1+5\%)}-R_{(C1-5\%)}) / R_{(C1)}) > 0.05. \qquad \text{Formula (A)}$$

$$(ABS(R_{(C1)}-R_{(C1+10\%)}) / R_{(C1)}) > 0.05 \qquad \text{Formula (B)}$$

wherein R denotes the light emission ratio, defined as (emission in the wavelength range $\lambda_{2e}$ upon irradiation in the wavelength range $\lambda_{2a}$ /emission in the wavelength range $\lambda_{2e}$ upon irradiation in the wavelength range $\lambda_{1a}$) observed at the concentration C1+5%, C1-5% or C1, C1+10%, respectively, and

ABS denotes the absolute value of the difference in the light emission ratios observed at the concentrations C1+5%, C1-5%, C1 and C1+10%, respectively.

2. Printing ink according to item 1, wherein the second emission wavelength range $\lambda_{2e}$ does not overlap with the first emission wavelength range $\lambda_{1e}$.

3. Use of the printing ink according to any of items 1 to 2 for forming an authentication mark on an article.

4. Ink set, comprising two or more inks according to any one of items 1 to 2, wherein two or more of the two or more inks are inks having a concentration of the first dye C1 satisfying Formula (A) and/or Formula (B) as defined in claim 1, and which only differ in one or both of relative and total amounts of first and second dye to give rise to different emission ratios R.

5. Article carrying an authenticating mark formed with a printing ink according to any of items 1 to 2.

6. Authentication method, comprising irradiating an authentication mark obtained by the use according to item 3 or an authenticating mark present on the article according to item 5 with electromagnetic radiation falling in the wavelength range $\lambda_{1a}$ to cause excitation of the first fluorescent dye, and detecting the presence or absence of emission in the wavelength range $\lambda_{2e}$.

7. A method of authenticating a mark, said mark having been printed using the printing ink according to any of items 1 to 2, comprising:

- irradiating said mark with electromagnetic radiation falling within the excitation wavelength range $\lambda_{1a}$ of the first fluorescent dye;
- detecting an electromagnetic radiation emission response from said mark;
- performing a decision process for deciding whether the electromagnetic radiation emission response fulfils an authentication criterion associated with presence of both said first and said second fluorescent dye in a predetermined relative concentration of the dyes, and
- determining said mark as being authentic if said decision process indicates that said mark fulfils said criterion.

8. The method of item 7, wherein said irradiating comprises generating an irradiation spectrum of predetermined shape and said authentication criterion is associated with said predetermined shape.

9. The method of one of items 7 to 8, wherein said irradiating comprises generating at least a first spectrum of predetermined first shape and a second spectrum of predetermined second shape, said first shape being different from said second shape, and said authentication criterion is associated with said predetermined first and second shapes.

10. The method of one of items 7 to 9, wherein said decision process comprises evaluating a level of said electromagnetic radiation emission response within said second emission wavelength range $\lambda_{2e}$ when said mark is irradiated with electromagnetic radiation falling within the excitation wavelength range $\lambda_{1a}$ of the first fluorescent dye.

11. The method of item 10, wherein said decision process furthermore comprises evaluating a level of said electromagnetic radiation emission response within said second emission wavelength range $\lambda_{2e}$ when said mark is irradiated with electromagnetic radiation not falling within the excitation wavelength range $\lambda_{1a}$ of the first fluorescent dye, where said authentication criterion takes into account a relationship between said evaluated levels.

12. The method according to any one of items 7 to 11, wherein the method further comprises a step of irradiating the authenticating mark with electromagnetic radiation falling in the wavelength range $\lambda_{2a}$ and observing the emission in the wavelength range $\lambda_{2e}$ caused thereby, and where said authentication criterion takes into account the relationship between the emissions in the wavelength range $\lambda_{2e}$ observed upon irradiation in the wavelength range $\lambda_{1a}$ and upon irradiation in the wavelength range $\lambda_{2a}$.

13. The method according to item 12, wherein the emissions in the wavelength range $\lambda_{2e}$ upon irradiation in the wavelength ranges $\lambda_{1a}$ and $\lambda_{2a}$ are utilized to calculate a light emission ratio R defined as (emission in the wavelength range $\lambda_{2e}$ upon irradiation in the wavelength range $\lambda_{2a}$ /emission in the wavelength range $\lambda_{2e}$ upon irradiation in the wavelength range $\lambda_{1a}$) and said authentication criterion takes into account said light emission ratio R.

14. A system for authenticating a mark on an article, said mark having been printed using the printing ink according to any of items 1 to 2, comprising:

an electromagnetic source for irradiating said mark with electromagnetic radiation falling at least within the excitation wavelength range $\lambda_{1a}$ of the first fluorescent dye;

a detector for detecting an electromagnetic radiation emission response from said mark;

a processor for performing a decision process for deciding whether the electromagnetic radiation emission response fulfils an authentication criterion associated with presence of both said first and said second fluorescent dye, and for determining said mark as being authentic if said decision process indicates that said mark fulfils said authentication criterion.

Further aspects and preferred embodiments of the present invention will become more apparent from the following description.

## 4. Brief Description of the Figures

Figure 1 schematically illustrates the excitation (a) and emission (e) peaks $\lambda_{1a\text{-max}}$, $\lambda_{1e\text{-max}}$, $\lambda_{2a\text{-max}}$ and $\lambda_{2e\text{-max}}$ of the two fluorescent dyes comprised in the ink according to the present invention, as well as the respective excitation and emission wavelength ranges $\lambda_{1e}$, $\lambda_{1a}$, $\lambda_{2a}$ and $\lambda_{2e}$.

Figure 2 shows the emission and excitation spectra for a commercial yellow dye (left) and a commercial orange dye (right).

Figure 3 illustrates the cascade effects obtained with the commercial fluorescent dyes by showing the excitation spectra of individual dyes and for the mixtures of various relative amounts.

Figure 4 shows the emission spectra of various mixtures of the two dyes for excitation at 400 nm.

Figure 5 shows the light emission ratios obtained for available excitations as a function of the relative donor concentration.

Figures 6a and 6b show the relative variation of light emission ratio corresponding to excitations as a function of the relative concentration of the yellow dye.

Figures 7, 8 and 9 show QR codes printed with different ink compositions and illustrate the cascade effect in Figures 8 and 9.

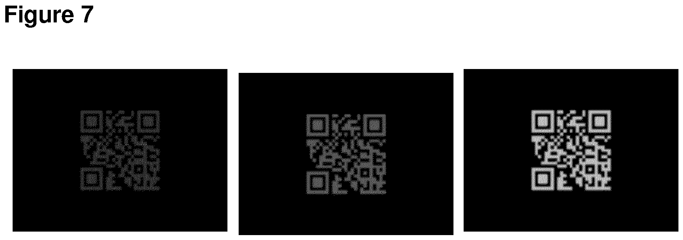

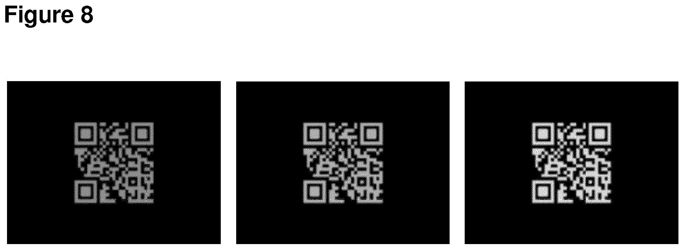

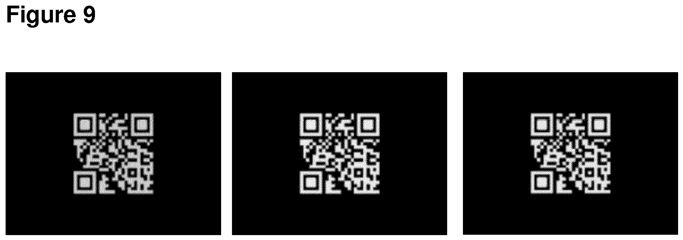

Specifically, Figure 7 shows a QR code printed with 100% orange dye imaged at 580 nm +/- 10 nm under Dark Blue (445 nm) excitation (Left), Light Blue (475 nm) excitation (Centre) and Green (525 nm) excitation (Right). Figure 8 shows a QR code printed with 95% orange and 5% yellow dye imaged at 580 nm +/- 10 nm under Dark Blue (445 nm) excitation (Left), Light Blue (475 nm) excitation (Centre) and Green (525 nm) excitation (Right). Figure 9 shows a QR code printed with 90% orange and 10% yellow dye imaged at 580 nm +/- 10 nm under Dark Blue (445 nm) excitation (Left), Light Blue (475 nm) excitation (Centre) and Green (525 nm) excitation (Right).

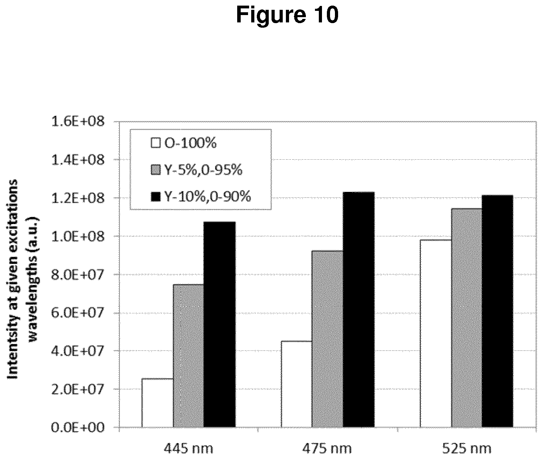

Figure 10 shows the intensity of emission at 580 nm for each mark at each monochromatic excitation wavelength as used in Figures 7, 8 and 9.

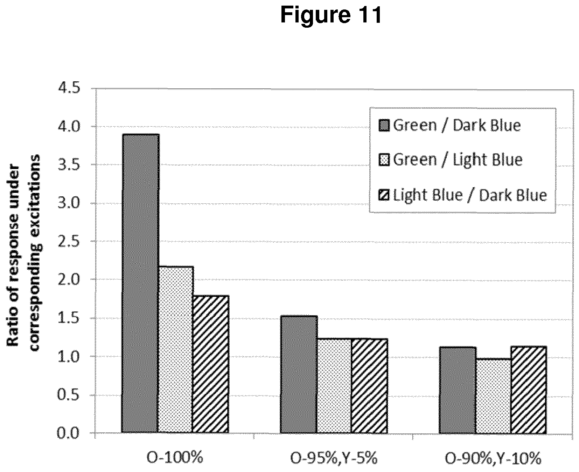

Figure 11 shows bar charts representing the expected response ratio for the available excitations.

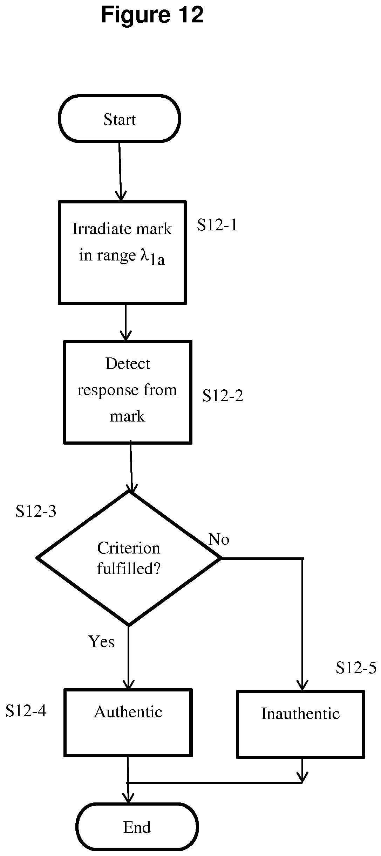

Figure 12 is a flow chart that shows an embodiment of an authentication method.

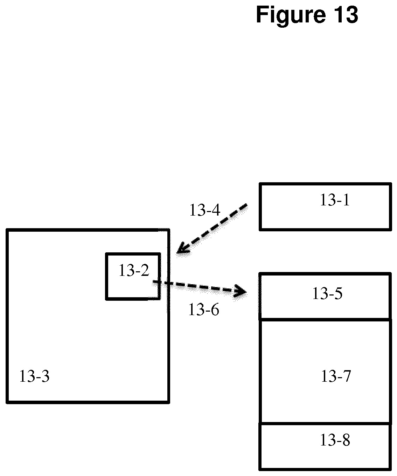

Figure 13 is a schematic representation of an embodiment of an authentication system.

## 5. Detailed Description of the Invention

The present invention pertains to a printing ink comprising a first fluorescent dye and a second fluorescent dye dissolved in the ink, wherein said first fluorescent dye, upon excitation by electromagnetic radiation falling within at least one excitation wavelength range of the first fluorescent dye, is capable of emitting electromagnetic radiation in a first wavelength range that overlaps with at least one excitation wavelength range of the second fluorescent dye, to thereby excite the second fluorescent dye to emit electromagnetic radiation in a second wavelength range differing from the first wavelength range:

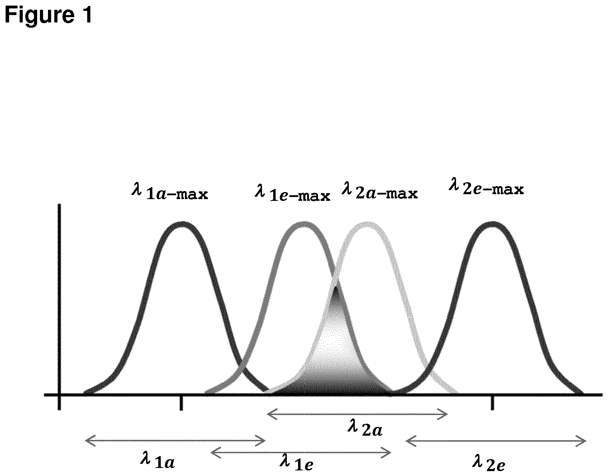

In consequence, as illustrated in Figure 1 when the first fluorescent dye is excited by irradiating electromagnetic radiation falling within at least one excitation wavelength range $\lambda_{1a}$ of the first dye, the first fluorescent dye is able to emit electromagnetic radiation in a first wavelength range $\lambda_{1e}$. The emission of the first fluorescent dye in the wavelength range $\lambda_{1e}$ overlaps with at least one excitation wavelength range $\lambda_{2a}$ of the second fluorescent dye and is utilized to excite the second fluorescent dye to emit light in a second wavelength range $\lambda_{2e}$. This principle is referred to as "cascade effect" in the present invention.

Employing a combination of fluorescent dyes wherein the emission of the first fluorescent dye is capable of exciting the second fluorescent dye allows obtaining the emission of the second fluorescent dye by merely exciting the first fluorescent dye, e.g. by irradiating the ink with electromagnetic radiation in a wavelength range at which excitation of the first fluorescent dye occurs, and it is not necessary to irradiate the ink with radiation capable of exciting the second fluorescent dye in order to obtain the second dye's emission. If the proportion of second dye (acceptor) is significantly larger than that of the first dye (donor), the spectrum observed upon excitation of the donor will be dominated by the emission of the acceptor, with minor portions stemming from the emission of the donor that is not utilized for excitation of the acceptor.

Having regard to these features of the invention, it is one decisive advantage of the invention that the counterfeiter is unable to detect, by analysis of the emission spectra of the ink mark, that two dyes are present because he will mainly (or exclusively) measure the emission of the second dye (acceptor), since the emission of the donor mainly excites the acceptor. The emission of the donor may thus not be detectable at all, or may be rather weak, depending on the relative amounts of donor and acceptor. A counterfeiter's analysis of the ink mixture in the authentication mark is rendered more difficult by the fact that relatively small amounts of donor dye, e.g. 5 to 10% based on the total weight of acceptor and donor dye may in some cases suffice to produce the cascade effect.

One further unique feature of the invention is that the authenticating method can be used to observe the (possibly averaged) emission intensity response as tailored by the cascade effect (i.e. depending on the choice and ratios of donor and acceptor) but also by the specific illumination (i.e. the specific shape of the excitation spectrum, e.g. intensity of radiation as a function of wavelength, which can for example be adjusted by varying the specific illumination intensities of sources of radiation that emit different wavelenghts) used to generate the response, and thus the signature of the mixture.

Therefore, the response, i.e. the observed emission, will be very sensitive to the precise composition of the mixture, which makes it more difficult to reproduce, leading to a spectrum signature that provides a high reliability of authentication. Indeed, the emission spectrum, observed over a spectral range that is not necessarily large but identical for all the acquired images of an ink mark according to the invention does not substantially vary in shape, but varies in intensity level as the ratio of donor and acceptor is modified. As a consequence, a counterfeiter is forced to reproduce very precisely the composition of the mixture in order to generate an acceptable signature in response to the specific illumination.

It is one particular advantage of the present invention that the spectral response (also referred to as spectral signature) not only depends on the energy transfer from the donor to the acceptor (the cascade effect), but also on the excitation wavelengths used. Using the same fluorescent dyes producing the same cascade effect, but with different excitation wavelengths, will change the observed spectral response (signature). The preparation of very precise mixture compositions hence can produce distinctive signatures that should only be reproducible at the same excitations and for the same mixture ratio. As a counterfeiter generally has no knowledge about the excitation wavelength(s) used for authenticating, it is utmost difficult for him to mimic the signature obtained by using the ink of the present invention by using a combination of dyes that lead to a similar spectral response when excited within a broad wavelength range. Rather, the counterfeiter would need to know which exact excitation conditions (such as a combination of different excitation wavelengths in a certain intensity relationship) are used, and would then need to adapt the spectral response such as to mimic the signature of the ink of the present invention.

Therefore, the excitation pattern used in the claimed excitation-based authenticating method can be made complex enough to carry a significant and discriminant ink feature, and therefore, one can exploit these properties by imaging the ink mark with excitation light at different wavelengths. Sequential excitation is preferred in order to exploit linear emission responses. This allows doing code verification/identification (or checks on mark geometry) and allows at the same time verifying that the ink mark variation with the different excitations behaves according to an expected signature (authentication).

Therefore, a problem solved by an embodiment of this invention is that it allows for a more robust authentication for luminescent marks than methods simply imaging a broad spectral range. Embodiments of the invention, which use an excitation spectrum approach, can achieve these aims in a more compact and affordable way than other techniques based on spectral emission analysis.

In addition, embodiments of the present invention also address the desire for tailoring the ink signature to certain requirements of a user of the ink by using a combination of two specific fluorescent dyes. Further advantages of the present invention will become apparent from the following detailed description of the present invention.

These and other advantages of embodiments of the present invention over the prior art can be summarized as follows:

- The cascade effect described above allows generating a unique excitation and/or emission spectrum signature for an enhanced discrimination. The tailoring of the inks allows quickly changing ink properties, addressing the case of an ink that is copied and that requires a quick action to cure the problem. Ideally, the authenticating device hardware does not need to be changed, as the change in ink properties can be taken into account by simply updating the authentication criterion, i.e. whether a measured response from a mark under examination shows the behavior expected of an authentic mark. This updating of the authentication criterion can be achieved by a simple software update in a programmable authentication device.

  An example of such an easy tailoring of the ink properties is a change or variation in the light emission ratio R of the security mark, as defined later, that is caused by a minor change in in the relative amounts of donor and acceptor dye in the ink composition. The light emission ratio can be used as authentication means, but may be difficult to observe with the naked eye.

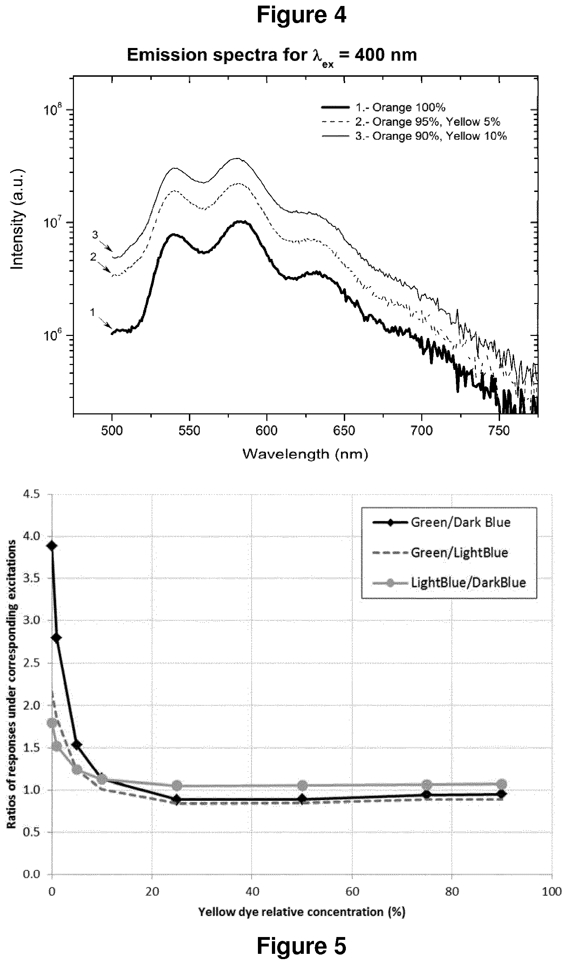

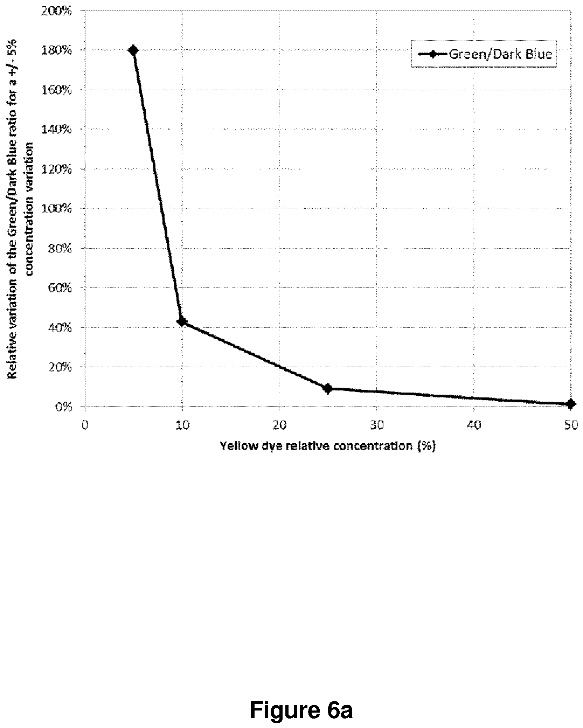

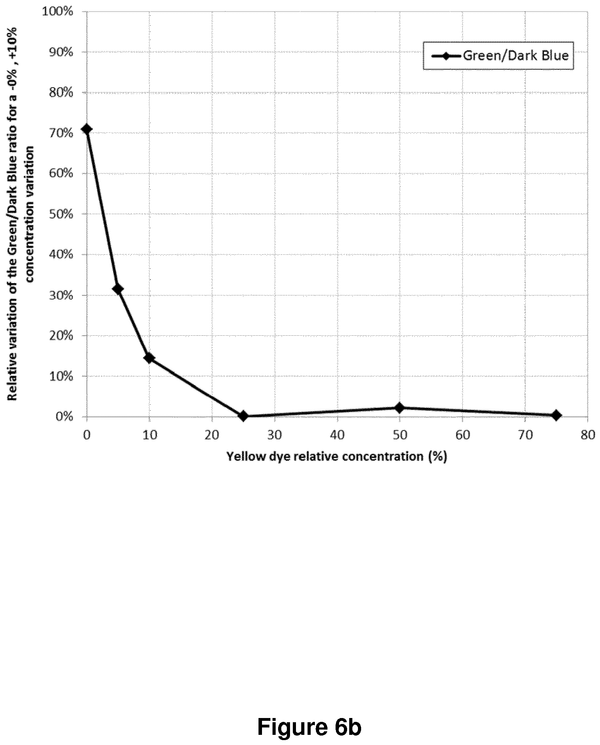

  Within certain ranges for the relative amounts of donor and acceptor dye, the light emission ratio is highly sensitive to the composition of the ink, as will be described later and shown in Figures 5, 6a and 6b. The light emission ratio, respectively its dependency on the exact composition and the relative amounts of donor and acceptor dye, thus forms a type of "key" that is representative for the authenticity of an authentication mark. A counterfeiter would thus not only need to mimic the overall appearance of the authentication mark by choosing the correct fluorescent dyes, but would also need to reproduce the exact composition, i.e. the relative amount of donor and acceptor, in order to obtain the correct emission intensity at certain wavelengths and/or the correct light emission ratio.

- The emission spectra of commercial markers are often publicly available. Therefore, counterfeiters may combine several dyes and/or pigments to mimic a certain signature. However, excitation spectra are less straightforward to obtain, and therefore it represents a more complex problem for a counterfeiter to select and combine known markers in the required amounts such that a spectrum shape or emission intensity ratio deemed authentic is obtained for a selected (predetermined) excitation radiation.

- Embodiments of the present invention are compatible with laser illumination (quasi-monochromatic excitation) for more detailed signatures and higher discrimination capability.

- The authentication method of an embodiment of the invention is also more suitable for handheld devices (e.g. smartphone based systems), where movable parts or bulky components, which would be required for spectral emission analysis, represent a drawback.

- In accordance with an embodiment of the invention, it is cheaper and technically simpler to do a form of excitation analysis (e.g. with multi LED illumination or with multi-laser illumination) with an imaging device than complex emission analysis (Fabry-Perot method; Custom Bayer; AOTF; tunable band pass, etc.).

- Embodiments of the present invention are also easier to implement in authentication systems detecting luminescence, since a modification of sensors to produce multispectral emission imaging is not required.

- The method proposed according to an embodiment also has the advantage of allowing partial authentication of a code (if used in conjunction with them). This means that even if a data matrix (or any other 1D or 2D code) is partially erased up to an extent not allowing decoding, the partial authentication of the ink with the present invention is still possible.

- In addition, the spectral signature to be regarded as genuine may rely on relative calculations (e.g. intensity ratios or correlations for different excitations). This allows avoiding problems caused by differing ink concentration or by ink aging.

- The authentication method of the invention can also be advantageously applied to not only dot matrix codes or others, but also on some fine printed designs like logos or images where security ink is printed on small areas hardly accessible with other methods.

In accordance with the invention, the signature of a genuine ink mark depends on the excitation wavelength(s) used and ink properties. Therefore, for a counterfeiter to forge the ink, he needs not only to know the ink spectral emission properties as a function of the excitation wavelength but also the excitation wavelengths used to generate the signature, which requires reverse engineering of the device used. This also means that the same ink can have different signatures if excitation wavelengths are modified or different wavelengths are used.

Further, the security of the solution can be enhanced by prescribing the use of several excitation wavelengths for authentication, thus increasing the complexity of the signature to match.

## WAVELENGTH RANGES AND ABSORPTION PEAKS

In the present invention,

$\lambda_{1a}$ denotes the excitation wavelength range around an excitation peak at a wavelength $\lambda_{1a\text{-max}}$ of the donor dye,

$\lambda_{1e}$ denotes the emission wavelength range around an emission peak at a wavelength $\lambda_{1e\text{-max}}$ of the donor dye;

$\lambda_{2a}$ denotes the excitation wavelength range around an excitation peak at a wavelength $\lambda_{2a\text{-max}}$ of the acceptor dye, and

$\lambda_{2e}$ denotes the emission wavelength range around an emission peak at a wavelength $\lambda_{2e\text{-max}}$ of the acceptor dye.

As outlined above and as defined in claim 1, when the first fluorescent dye is excited by irradiating electromagnetic radiation falling within at least one excitation wavelength range $\lambda_{1a}$ of the first dye, the first fluorescent dye is able to emit electromagnetic radiation in a first wavelength range $\lambda_{1e}$. As shown in Figure 1, the degree of overlap (and the intensity) of the light emitted by the donor must be sufficient to excite the acceptor to emit light. The emission of the first fluorescent dye in the wavelength range $\lambda_{1e}$ overlaps with at least one excitation wavelength range $\lambda_{2a}$ of the second fluorescent dye and is utilized to excite the second fluorescent dye to emit light in a second wavelength range $\lambda_{2e}$ ("cascade effect"). It is thus required that the emission of the donor dye overlaps with at least one excitation wavelength range of the acceptor dye. This is illustrated in Figure 1.

Herein, the term "wavelength range" in the above ranges $\lambda_{1a}$, $\lambda_{1e}$, $\lambda_{2a}$, and $\lambda_{2e}$ generally denotes the range around an emission peak at a wavelength $\lambda_{max}$ in which excitation or emission, respectively, is observed. More precisely, it defines the area around a peak value $\lambda_{max}$ in a normalized and background-subtracted emission or excitation spectrum, as measured on a transparent substrate such as a plastic (e.g. polyester) film or carrier, including the respective peak and the shoulders thereof up to the points where the line of the normalized and background-subtracted spectrum crosses the baseline (i.e. the reading in the normalized and background-subtracted spectrum where the observed value becomes zero). This range is centered around the respective peak $\lambda_{max}$.

A wavelength range may thus also be regarded as the breadth of the respective peak in an excitation or emission spectrum. As one example, if a given first dye exhibits a peak in an excitation spectrum at 450 nm, and breadth of this peak extends to wavelengths of 440 and 460 nm, respectively, the excitation wavelength range is from 440 to 460 nm.

As shown in Figure 1, the degree of overlap (and the intensity) of the light emitted by the donor must be sufficient to excite the acceptor to emit light. Therefore, the term "the emission of the first fluorescent dye in the wavelength range $\lambda_{1e}$ overlaps with at least one excitation wavelength range $\lambda_{2a}$ of the second fluorescent dye" denotes that there is an overlap in the respective ranges in the emission wavelength range of the first dye (donor) and the excitation wavelength range of the second dye (acceptor). Taking the above example of a first dye (donor) having a first excitation wavelength range $\lambda_{1e}$ of 440 to 460 nm, an overlap is given if an excitation wavelength range of the second dye (acceptor) $\lambda_{2a}$ includes the values of 440 nm or 460 nm, respectively. As one example, an overlap is given if the first emission wavelength range $\lambda_{1e}$ is from 440 to 460 nm, and excitation wavelength range $\lambda_{2a}$ of the second fluorescent dye is from 450 to 470 nm. An overlap in the sense of the present invention is however not given if merely the end values of the ranges are the same, such as in the case of $\lambda_{1e}$ = 440 to 460 nm and $\lambda_{2a}$ = 460 to 480 nm.

According to the above definition, a small overlap in the respective ranges $\lambda_{1e}$ and $\lambda_{2a}$ suffices, as also then a cascade effect in the sense of the present invention occurs. The occurrence of the cascade effect is, however, more prominent if there is a greater degree of overlap between an emission wavelength range of the first dye and an excitation wavelength range of the second dye. In the present invention, this is expressed by a preferable, more restricted definition of the term "wavelength range". Accordingly, the term "wavelength range" preferably denotes the range around a peak wavelength $\lambda_{max}$ in a normalized and background-subtracted emission or excitation spectrum, centered around the respective peak at $\lambda_{max}$ and including the shoulders thereof, up to and including the wavelengths where the line of the normalized and background-subtracted peak falls to 10%, more preferably 25%, further more preferably 50% of the peak value at the wavelength $\lambda_{max}$. Due to these preferred definitions of the term "wavelength range", a greater overlap between the emission spectrum of the first dye and the excitation spectrum of the second dye is secured. For instance, if the "wavelength range" is defined as that area surrounding an emission or excitation peak at a wavelength $\lambda_{max}$ up to the point where the observed value falls to 25% of the value at $\lambda_{max}$, at least 12.5% of the spectral range in which emission or excitation is observed (assuming a symmetric peak shape) falls within the respective other range, thereby securing sufficient overlap.

In another preferred embodiment, the respective ranges $\lambda_{1e}$ and $\lambda_{2a}$ overlap in such a manner that the overlap in the ranges (calculated from the peak wavelengths up to the wavelengths where the line crosses the baseline, i.e. the value in the respective spectrum becomes zero) is such that 20% or more, more preferably 50 % or more, and particularly preferably 70% or more of the wavelengths included in the range $\lambda_{1e}$ are encompassed by the range $\lambda_{2a}$.

In the present invention, it assumed that the first fluorescent dye (donor) emits light, which then, due to the

overlap between $\lambda_{1e}$ and $\lambda_{2a}$, excites the second dye to emit light in a another wavelength range. However, without wishing to be bound by theory, the energy transfer from the first dye to the second dye may also be a radiationless transfer (so-called Foerster resonance energy transfer, FRET). Since it is a requirement for both a radiationless Foerster-type energy transfer and an energy transfer by radiation that there is an overlap between the emission spectrum of the donor and the excitation spectrum of the acceptor, it is without relevance for the present invention whether the energy transfer between the donor and the acceptor is radiationless or includes emission of radiation from the donor and absorption of the radiation (for excitation) by the acceptor, see also D. L. Andrews, A UNIFIED THEORY OF RADIATIVE AND RADIATIONLESS MOLECULAR ENERGY TRANSFER; Chemical Physics 135 (1989) 195-201.

It is preferred that the first fluorescent dye displays an excitation peak in its excitation spectrum at a wavelength ($\lambda_{1a\text{-}max}$) that is shorter than the wavelength ($\lambda_{2a\text{-}max}$) at which the second fluorescent dye displays an excitation peak in its excitation spectrum, i.e. that $\lambda_{1a\text{-}max}$ (nm) < $\lambda_{2a\text{-}max}$ (nm).

It is also preferred, in this and other embodiments of the invention, that the first fluorescent dye displays a maximum emission in its emission spectrum at a wavelength ($\lambda_{1e\text{-}max}$) that is shorter than the wavelength ($\lambda_{2e\text{-}max}$) at which the second fluorescent dye displays a maximum emission in its excitation spectrum, i.e. that $\lambda_{1e\text{-}max}$ (nm) < $\lambda_{2e\text{-}max}$ (nm) .

It is further preferred that $\lambda_{1a\text{-}max} < \lambda_{1e\text{-}max} < \lambda_{2a\text{-}max} < \lambda_{2e\text{-}max}$, as illustrated in Figure 1. This is however not mandatory, as an overlap between $\lambda_{1e}$ and $\lambda_{2a}$ can also be realized if $\lambda_{1e\text{-}max} > \lambda_{2a\text{-}max}$. Accordingly, in one embodiment of the present invention $\lambda_{1a\text{-}max} < \lambda_{2a\text{-}max} < \lambda_{1e\text{-}max} < \lambda_{2e\text{-}max}$

Typically, the emission peak wavelength of the first and second dye is located at longer wavelengths than the respective excitation peak wavelength, i.e. $\lambda_{2a\text{-}max} < \lambda_{2e\text{-}max}$ and $\lambda_{1a\text{-}max} < \lambda_{1e\text{-}max}$. In this case, the emission occurs at longer wavelengths (at lower energy) as compared to the respective excitation. It is however also possible to use, as a first fluorescent dye (donor), so-called anti-Stokes fluorescent dyes in the present invention, where the emission occurs at shorter wavelengths as compared to the respective excitation, i.e. $\lambda_{1a\text{-}max} > \lambda_{1e\text{-}max}$. In such an embodiment, $\lambda_{2a\text{-}max}$ may be at shorter or longer wavelengths as compared to $\lambda_{1e\text{-}max}$.

The difference between the two excitation peaks of the first (donor) and second (acceptor) fluorescent dye, respectively, i.e. ($\lambda_{2a\text{-}max}$) - ($\lambda_{1a\text{-}max}$), is for instance at least 5 nm, e.g. 5 to 500nm, 10 to 200nm, 20 to 80nm, 30 to 70nm, and preferably 50 to 200nm. A difference of at least 20 nm is preferred in order to avoid excitation of the acceptor dye by the irradiation of the electromagnetic radiation that is intended to excite donor dye in an authentication method.

The absolute difference between the emission peak $\lambda_{1e\text{-}max}$ of the donor dye and the excitation peak of the acceptor dye $\lambda_{2a\text{-}max}$, i.e. ABS(($\lambda_{2a\text{-}max}$) - ($\lambda_{1e\text{-}max}$)) is for instance at most 20 nm. A smaller difference is preferable, since then a greater overlap between $\lambda_{2a}$ and $\lambda_{1e}$ can be ensured.

Due to possible interactions between the dyes, a potential overlap in the respective peaks and ranges, and the potentially resulting difficulties in the spectral analysis, the measurements are performed separately for each dye.

The wavelength at which a dye displays a peak in the excitation spectrum ($\lambda_{a\text{-}max}$) or emission spectrum ($\lambda_{e\text{-}max}$), and the respective excitation and emission wavelength ranges are measured as follows.

Notably, in the present invention all measurements are performed at room temperature (20 °C), and consequently the peak wavelengths $\lambda_{1a\text{-}max}$, $\lambda_{1e\text{-}max}$, $\lambda_{2a\text{-}max}$, and $\lambda_{2e\text{-}max}$ as well as the respective ranges $\lambda_{1a}$, $\lambda_{1e}$, $\lambda_{2a}$, and $\lambda_{2e}$ are those measured at room temperature according to the following procedure:

First of all, a blank is prepared, which is ensured to be formulated such as not to interfere with the fluorescence of the donor and acceptor dyes, both chemically and optically. A composition that was found to serve this purpose well is composed of 87 wt.-% Methylethylketone, 10.3 wt.-% of a hydroxyl-containing copolymer made from 84 wt % vinyl chloride and 16 wt.% of acrylic acid ester (commercially available from Wacker Chemie under the tradename VINNOL E15/40 A) and 2% of a terpolymer made from 84 wt.% vinyl chloride, 15 Gew.% vinyl acetate and. 1 wt.% dicarboxylic acid (commercially available from Wacker Chemie under the tradename VINNOL E15/45 M). While this system is preferably used for the present invention, also other systems can be employed as long as it is ensured that there is no or very little interference with the fluorescence of the donor and acceptor dyes, both chemically and optically.

Then two separate "pure" inks are prepared by dissolving 1.23% of the respective acceptor or donor dye in the above blank. These are used for determining the wavelength peaks and the wavelength ranges for both emission and excitation, separately for each dye.

For identifying a suitable relative concentration for obtaining a prominent cascade effect, mixtures from these two "pure" inks are prepared by mixing them at different concentrations: 1:99, 5:95, 10:90, 25:75, 50:50, 75:25. 90:10. 95:5 and 99:1, to thereby obtain a printing ink containing both the donor and acceptor dye.

Samples having 12 $\mu$m wet film deposit thickness are then prepared, using e.g. a K Control Coater from RK Print Coat Instruments, for all mixtures, the two pure inks and the blank using a coating bar, e.g. the HC2 coating bar, on a suitable white substrate (e.g. the white part of LENETA N2C-2 substrates), followed by drying at room temperature.

Then, all drawdown samples are measured in emission and excitation mode using a commercial Horiba Fluorolog III (FL-22) as further described below.

Horiba Fluorolog III measurement conditions:

The instrument used to perform emission and excitation spectra measurement is a commercial twice double monochromator equipped with a continuous Xe arc lamp as illumination source and a Hamamatsu R928P photomultiplier tube operated in photon counting mode as detector. The flat sample is positioned so that its normal direction is at an angle of 30 degrees with respect to the irradiation optical axis. The Fluorolog-III type of light collection method used is "Front Face". In this collection mode, the emission collection is performed at an angle of 22.5 degrees with respect to the irradiation beam. By using this collection method and setup, it is ensured that collecting direct specular reflection from the sample is avoided. Both excitation and emission monochromators are double monochromators fitted with 1200 grid/mm holographic gratings blazed at 500 nm.

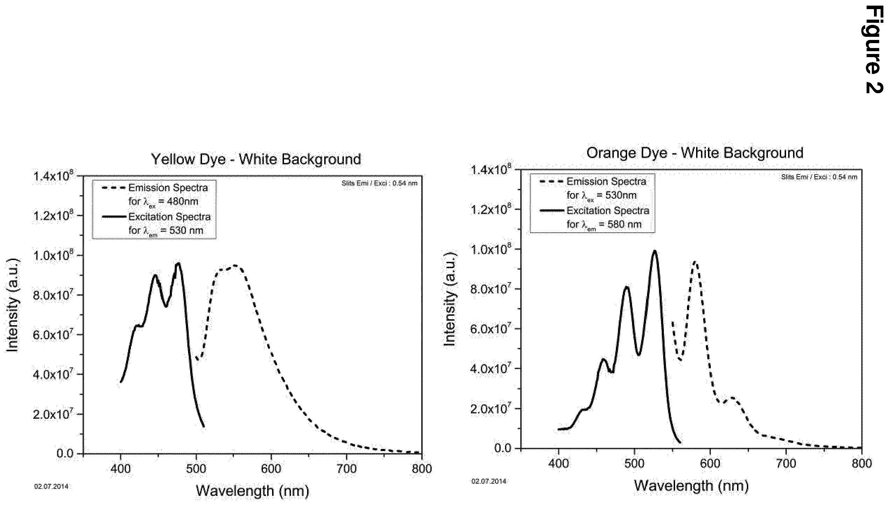

For excitation spectrum measurement, as shown for instance in the curves on the left of both plots of Fig 2, the following procedure is adopted: the emission monochromator is set at a given wavelength (the one where the emission is to be measured, for example 530 nm on Figure 2 left) and the excitation monochromator is scanned at 1 nm increment, over the wavelength range where the excitation spectrum is to be measured (e.g. 400 to 510 nm). At each excitation wavelength increment, a measurement of the emission signal is recorded by the detector using a 100 ms integration time. As known to the skilled person, since the irradiation source is not spectrally flat, a suitable irradiation correction is applied onto the measured signal at every wavelength using an appropriate spectral calibration. A spectral correction of the detector sensitivity is also applied. The spectrally corrected excitation spectrum can hence be reconstructed.

For emission spectrum measurement, the excitation monochromator is set to the desired excitation wavelength (e.g. at 480 nm for the left curve of the left plot of Figure 2) and the emission monochromator is scanned over the desired emission spectral range (500 to 800 nm for the right curve of the left graph of Figure 2 for example) at 1 nm increment while recording the detector signal at each wavelength with a 100 ms integration time. The emission spectrum is then constructed from all recorded data points and after having applied the suitable spectral sensitivity corrections of the instrument.

The spectral calibration of the Fluorolog III excitation channel is made using a procedure that is commonly applied by persons skilled in the art: the spectral irradiance is measured using a calibrated detector (e.g. a reference photodiode) positioned at the location of the sample. This is made for all wavelengths by scanning the excitation monochromators. This reference detector has a known spectral response (sensitivity as a function of the wavelength of radiation impinging on it) that has been previously determined by measuring an irradiation standard (e. g. a calibrated tungsten ribbon lamp) in a laboratory. An excitation spectral calibration curve is then calculated by dividing the real spectral sensitivity of the used reference detector by the measured spectral irradiance. This calibration curve can then be used to correct the spectral response to excitation of any further measurement by simple multiplication.

A spectral sensitivity calibration of the emission measurement channel of the Fluorolog III is performed in an analogue way by using a spectral irradiance standard (e.g. a tungsten ribbon lamp, which spectral irradiance has been determined in a laboratory). This lamp is disposed at the location of the sample and spectral emission is recorded by the Fluorolog III detector during scanning the emission monochromators. An emission spectral sensitivity curve is obtained by dividing the spectral irradiance curve of the standard irradiance source by the measured spectral curve. Further measurements are then corrected by multiplication by the spectral emission calibration curve.

These calibration procedures are repeated regularly to ensure correction of any instrument drift or detector/Xe lamp ageing.

The overall spectral resolution of the instrument for both emission and excitation measurements is 0.54 nm FWHM (Full Width at Half Maximum), for the slits configuration used in the measurement conditions described above..

The same above procedure is applied for all different samples measurements; only the spectral ranges for the excitation and emission spectrum measurements, along with the excitation and emission fixed wavelengths may differ depending on the dye composition of the samples.

As derivable from the above, since the measurements shall serve to evaluate the spectral properties in the final ink print, the donor or acceptor dye is dissolved in a blank composition at a concentration of 1.23 wt.-%. Then, emission and excitation spectra are recorded, separately for each dye, and under the same conditions as for the blank. For each dye, the background is subtracted and the spectrum normalized (with the highest peak having an intensity of 1.0), and the peak wavelength(s) $\lambda_{max}$ and the emission and excitation wavelength ranges $\lambda_{1a}$, $\lambda_{1e}$, $\lambda_{2a}$ and $\lambda_{2e}$ are determined by determining the points where the spectrum returns to baseline (or to 10, 25 or 50% above baseline, depending on the definition of the term "wavelength range" as discussed above).

These measurements thus provide the wavelength ranges $\lambda_{1a}$, $\lambda_{1e}$, $\lambda_{2a}$ and $\lambda_{2e}$ and the respective wavelengths of the peaks $\lambda_{1a-max}$, $\lambda_{1e-max}$ $\lambda_{2a-max}$ and $\lambda_{2e-max}$:These are then used to determine whether or not the requirements of the present invention are satisfied. These measurements can also be used to identify suitable dyes as acceptor and donor dyes for the purposes of the present invention.

In the above explanations, it was assumed that each dye exhibits only one excitation peak ($\lambda_{1a-max}$, $\lambda_{2a-max}$) and one emission peak ($\lambda_{1e-max}$, $\lambda_{2e-max}$), and only one corresponding excitation wavelength range ($\lambda_{1a}$, $\lambda_{2a}$) and one emission wavelength range ($\lambda_{1e}$, $\lambda_{2e}$). While this is true for many dyes, a considerable number of dyes show multiple excitation peaks and multiple emission peaks (see Figure 2). In such cases, each peak in the normalized spectrum reaching an intensity of 0.5 or more (preferably 0.75 or more) may serve as emission peak ($\lambda_{1e}$, $\lambda_{2e}$) or absorption peak ($\lambda_{1a}$, $\lambda_{2a}$) for the purposes of the present invention, so that there may be multiple $\lambda_{1e}$ and $\lambda_{1a}$, or multiple $\lambda_{2e}$ and $\lambda_{2a}$.

The explanations above then apply to each of the peaks and wavelength ranges. For instance, it goes without saying that it is sufficient that there is an overlap between any $\lambda_{1e}$ and any $\lambda_{2a}$, so that energy is transferred from the donor to the acceptor.

When an excitation or emission spectrum of a dye contemplated for use in the present invention shows several overlapping peaks, the peaks and wavelength ranges are obtained by fitting the obtained spectrum using a suitable software (least square method), such as for instance OCTAVE. Herein, a spectrum of overlapping peaks can be satisfactorily (Goodness of Fit <0.1) simulated by assuming an overlap of two (or rarely three) peaks, and the simulated values are taken for the identification of the peak wavelengths and for the identification of the wavelength ranges.

## DYES

Generally speaking, both the first and second dye/pigment preferably shows excitation bands and emission bands in the range of 40 to 2400nm, in particular 300 to 1100nm. Preferably, the donor dye shows emission bands, in particular the maximum emission, in the UV range or visible range (in particular 300 to 700nm), and the acceptor dye excitation bands (to be excited by the donor), in particular the maximum excitation, in the visible or IR range (in particular 400 to 1100nm). "Visible range" means from 400 to 700nm, "UV range" from 40 to less than 400nm and "IR range" more than 700nm to 2400nm. More specifically, the donor dye shows preferably emission band(s) matching acceptor dye excitation band(s) in the range 250-900 nm

Fluorescent dyes useful for preparing the printing ink of the invention and for implementing the authentication method, can be suitably selected from commercially available dyes. They can for instance be selected from the following substance classes:

Cyanines (polymethines) and the related cyanine-type chromophors, quinones and the related quinone-type chromophors, porphines, phtalocyanines and the related macrocyclic chromophors as well as polycyclic aromatic chromophors.

Cyanine (polymethine) dyes are known in the art and used as photographic sensitizers (D.M. Sturmer, The Chemistry of Heterocyclic Compounds, Vol 30, John Wiley, New York, 1977, pp 441-587; Eastman Kodak). In a more recent application, stable representatives of this compound class, selected from the coumarins and rhodamines, were also used as laser dyes (J.B. Marling, J.H. Hawley, E.M. Liston, W.B. Grant, Applied Optics, 13(10), 2317 (1974)). Known fluorescent Rhodamine dyes include e.g. Rhodamine 123, Rhodamine 6G, Sulforhodamine 101, or Sulforhodamine B.

Phthalocyanines and related dyes are the "industrial variant" of porphines and include a greater number of well-known fluorescent dyes. They generally absorb at the long wavelength end of the visible spectrum. The class of phthalocyanines at large comprises as well the higher-conjugated analogs, such as the naphthalocyanines, which absorb farther in the IR, as well as the heterosubstituted analogs of phtalocyanines; the common point defining this compound class is that all of its members are derived from aromatic ortho-dicarboxylic acids or from their derivatives.

Quinone dyes are known in the art and used for textile and related dying applications (e.g. indigoid dyes, anthraquinone dyes, etc.). Electronegative groups or atoms along the quinone skeleton can be present to enhance the intensity of the absorption band, or to shift it to longer wavelengths.

Fluorescent aromatic polycyclic dyes include a rigid, planar molecular structure (similar to the graphite lattice) which may carry substituents. Typically the planar molecular structure comprises at least two fused aromatic benzene rings (e.g. 2 to 6 rings). In one of the fused aromatic rings, e.g. the central ring of three fused six-membered aromatic rings, one or two carbon atoms may be replaced by C=O, O and/or N. Fluorescent members of this class of dyes and pigments can be selected e.g. from perylenes (e.g. Lumogen F Yellow 083, Lumogen F Orange 240, Lumogen F Red 300, all available from BASF AG, Germany), naphtalimides (e.g. Lumogen F Violet 570, available from BASF AG, Germany) quinacridones, acridines (e.g. Acridine orange, Acridine yellow), oxazines, dioxazines, or fluorones (e.g. Indian Yellow) are examples of such dyes.

A suitable pair of donor and acceptor dye can be properly selected from these and other known fluorescent dyes based on their spectral properties which, as a rule, are published by the manufacturer and can be easily measured, as explained above. It however needs to be considered that the excitation behavior in the dried printed ink composition is decisive for obtaining the effect of the invention, so that published data generally should be verified by measuring the absorption and emission spectrum in accordance with the method described above for a printed ink on the final substrate. This is due to the fact that published data may relate to solutions of the dyes in a particular solvent (e.g. $CH_2Cl_2$) wherein the spectral properties may be different from the printed ink, e.g. due to interaction with substrate.

Even if only the excitation and emission maxima are available (before complete absorption and emission spectra have been measured) an evaluation will be possible to what extent the emission spectrum of the donor is likely to overlap with the excitation spectrum of the acceptor dye thereby allowing a screening of suitable candidates. The description above has been provided for a printing ink containing one donor and one acceptor dye. However, also more than one (e.g. two or three) donor dyes may be used, and that these may be used to excite more than one (e.g. two or three) acceptor dyes. Also, it is possible to use a single donor dye, which emits in a wavelength range $\lambda_{1e}$ that overlaps with both an absorption range $\lambda_{2a}$ of an acceptor dye to cause emission in a wavelength range $\lambda_{2e}$ and an absorption range $\lambda_{3a}$ of another acceptor dye to cause emission in a wavelength range $\lambda_{3e}$. This could be particularly advantageous, as the resulting emission spectrum will be even more difficult to analyze and counterfeit.

Also, in the case of a an acceptor dye showing two different emission peaks in different emission wavelength ranges $\lambda_{2e}$, $\lambda_{2e}$, in response to excitation in two different excitation wavelength ranges $\lambda_{2a}$, $\lambda_{2a}$, this acceptor dye may be used in combination with two donor dyes having respective emission ranges $\lambda_{1e}$ and $\lambda_{3e}$. Preferably, the two donor dyes used in this embodiment have overlapping excitation ranges $\lambda_{1a}$ and $\lambda_{3a}$, so that excitation with a single wavelength (from e.g. a laser) is capable of exciting both donor dyes to cause emission in both emission wavelength ranges of the acceptor dye.

## PRINTING INK COMPOSITION

The printing ink of the present invention comprises at least one fluorescent dye acting as a donor, and at least a one fluorescent dye acting as an acceptor, as explained above. However, the printing ink is typically not simply a solution of these two dyes in a solvent, but contains further components that render it suitable for use as a printing ink. Such components typically include at least a solvent and a binder.

The printing ink of the invention can be formulated in a manner known in the art depending on the printing method to be used, for instance as intaglio-printing ink, dry offset ink, e.g. dry offset UV drying ink, gravure ink or the like. It may also be provided as one printing ink in a set of printing inks. The printing ink of the invention comprises a solvent (organic or aqueous) in which donor and acceptor dye can be dissolved, a binder, optionally other, in particular, non-luminescent dyes or pigments and optionally additives.

The solvent can be selected from solvents commonly used in the art of ink formulation such as aliphatic or aromatic alcohols (e.g. ethanol, isopropanol or benzyl alcohol), esters, (e.g. ethyl acetate, butyl acetate), ketones (e.g. acetone, methyl ethyl ketone), carboxamides (e.g. diamethylformamide) or hydrocarbons including aliphatic and aromatic hydrocarbons such as xylene or toluene and glycols.

The binder can also be selected from binders commonly used in the art of ink such as polymeric binders of the resin type, e.g. alkyd resin, polyamide, acrylic, vinyl, polystyrene, or silicone.

The ingredients of the printing ink and the concentrations of donor and acceptor dye are preferably selected such that their concentrations still stay below their solubility limits in the blank during the drying process.

In one embodiment the printing ink of the invention may also comprise other, in particular, non-luminescent dyes or pigments. These other dyes or pigments are selected such that they mask the presence of donor and acceptor dye/pigment, thereby rendering their presence a covered secured feature. This masking is preferably effected by using other dyes that do not strongly absorb in the emission wavelength range of donor-acceptor $\lambda_{1e}$, $\lambda_{2e}$.

However, in order to avoid any interference with the cascade effect of the present invention, the printing ink preferably does not contain any further colouring additives, such as additional dyes and pigments. In this case, nonetheless the presence of the printing ink may be masked by printing the ink of the present invention on a region of a substrate that is strongly colored, e.g. in black.

Depending on the type of printing ink to be formulated, the same may also include one or more of the following optional additives: oils, diluents, plasticizers, waxes, fillers, dryers, antioxidants, surfactants, defoaming agents, catalysts, UV-stabilizers, polymerizable compounds and photoinitiators.

When selecting suitable components for the printing ink, the skilled person will consider that their properties, in particular their potential capacity to absorb and/or emit light, does not adversely affect the energy transfer (cascade effect) from the donor dye to the acceptor dye.

In the printing ink of the invention, the total mass ratio of the first and second fluorescent dyes based on the total dry content of the ink is preferably 0.05 wt.-% to 20 wt.-%.

In one preferred embodiment, the weight of the first fluorescent dye (donor), based on the total weight of the first and second fluorescent dyes (relative concentration of the donor), can be as high as the concentration $C_1$, which is the one that verifies the following condition:

Given the light emission ratio: R = emission for excitation at a wavelength $\lambda_{2a}$ / emission for excitation at a wavelength $\lambda_{1a}$, R being a function of the donor concentration relative to the acceptor, then, for a variation of +/- 5% in concentration ($C_1$+5% and $C_1$-5%), the induced relative variation of the light emission ratio R at those concentrations ($R(C_1$+5%) and $R(C_1$-5%)) compared to the value at $C_1$ ($R(C_1)$) should be more than 5%; i.e. as expressed by the following formula (A) :

$$(ABS(R_{(C1+5\%)} - R_{(C1-5\%)}) / R_{(C1)}) > 0.05$$

or

$$100*(ABS(R_{(C1+5\%)}-R_{(C1-5\%)}) / R_{(C1)}) > 5(\%). \hspace{2cm} \text{Formula (A)}$$

This formula is in fact a sensitivity criterion specifying that a variation of $\pm5\%$ in concentration C1 must cause a relative variation of the light emission ratio R greater that 5%.

Figure 5 illustrates how the ratios R change as a function of the concentration in the example given. Note that in Figure 5, three ratios are plotted which are $R_{G/DB}$, $R_{G/LB}$ and $R_{LB/DB}$ depending on the excitation wavelengths used.

Figure 6a shows the relative variations of parameter R (in this case, $R_{G/DB}$) for a +/- 5% change in concentration, calculated according to expression given in previous paragraph. The highest concentration at which variations are kept larger than 5% is, in this example, ~38%.

The above formula thus may also be referred to as "sensitivity criterion" in the following, as it reflects the sensitivity of the excitation spectrum to a variation in the relative amounts of donor and acceptor.

As defined above, R is the light emission ratio calculated from the emissions in the wavelength range $\lambda_{2e}$ upon excitation at different wavelengths in the wavelength ranges $\lambda_{2a}$ and $\lambda_{1a}$, respectively, i.e. in the excitation wavelength ranges of the donor and the acceptor dye. In practice, R is obtained by illuminating the ink, respectively the authentication mark formed therefrom, with excitation radiation in the wavelength range $\lambda_{2a}$ and measuring the emission in the wavelength range $\lambda_{2e}$. The observed emission is then divided by the emission measured in the same wavelength range $\lambda_{2e}$ upon excitation in the wavelength range $\lambda_{1a}$ to give the light emission ratio R for a given ink or authentication mark having the concentration of donor dye C1 (as the mass of donor dye divided by the total of the mass of the donor and the acceptor dye).

Detecting the electromagnetic radiation emission response can be performed using any suitable radiation detection device, e.g. a diode or an array of diodes sensitive to electromagnetic radiation. A detector may e.g. comprise an imager that outputs intensity values for a set of pixels.

Thereby, R can be determined for a given ink or authentication mark. For verifying whether the above sensitivity criterion is met, for example with the sensitivity criterion $(ABS(R_{(C1+5\%)}-R_{(C1-5\%)}) / R_{(C1)}) > 5\%$, it is then further necessary to determine R for two inks having a concentration of donor dye of C1 +5% and C1 -5%. As one example, if the concentration of donor dye C1 is 20 % and the concentration of acceptor dye is 80 %, the concentration C1+5% is 25 % of donor dye and 75 % of acceptor dye, and the concentration C1-5% is 15 % of donor dye and 85 % of acceptor dye.

If follows from the above that the relative amount of the donor dye must be 5% or greater in case the above formula (A) :$(ABS(R_{(C1+5\%)}-R_{(C1-5\%)}) / R_{(C1)}) > 5\%$ shall be met, as otherwise $R_{(C1-5\%)}$ cannot be determined. ABS denotes the absolute value of the difference obtained by subtracting $R_{(C1-5\%)}$ from $R_{(C1+5\%)}$, which can be positive or negative figure. R can be determined for excitation at any wavelength within the wavelength ranges $\lambda_{2a}$ and $\lambda_{1a}$, and any emission within the wavelength range $\lambda_{2e}$, but is preferably obtained for $\lambda_{2a-max}$, $\lambda_{1a-max}$ and $\lambda_{2e-max}$.

In cases where the concentration of the donor dye is high enough, the fluorescence of the acceptor leading to emission in the wavelength range $\lambda_{2e}$ is maximized, and consequently the highest possible emission intensity of the acceptor is obtained through the cascade effect for given irradiance. This is typically obtained if the relative concentration of the donor C1 is high, such as 80 % of donor dye and 20 % acceptor dye. In this case, the 20% of the acceptor dye are completely excited through the cascade effect at given irradiance. This situation does not change in cases of small variations of the relative concentrations, i.e. as compared to the situations of 75 % as C1 and 25 % of relative concentration of acceptor, or 85 % as C1 and 15 % of relative concentration of acceptor, as in any case the emission of the donor in the wavelength range $\lambda_{1e}$ is sufficient for exciting the entire amount of acceptor for emission in the wavelength range $\lambda_{2e}$. This is the case for instance for the relative amounts of greater than 50% in Figure 6a, where the relative variation of R is, or is close to, 0.

However, if the mass of donor relative to the total mass of donor and acceptor is lower, a small variation in the amount of donor leads to a large variation in the observed emission ratio. This is due to the fact that at relatively low concentrations of the donor, practically the entire emission of the donor can be utilized for exciting the acceptor, and to thereby cause emission in the wavelength range $\lambda_{2e}$. This is not the case for higher donor concentrations, as described above.

Accordingly, in one preferred embodiment, the concentration of the donor satisfies the above formula (A):

$$(ABS(R_{(C1+5\%)}-R_{(C1-5\%)}) / R_{(C1)}) > 0.05 \hspace{2cm} \text{Formula (A)}$$

which expresses that a variation in the donor mass relative to the total mass of donor and acceptor of $\pm$ 5% (10% in total) leads to a variation in the emission ratio that is greater than 5%. This is for instance obtained for relative amounts of donor of less than 38% in Figure 6a. As can be seen from Figure 6a, at smaller relative amounts of donor, the variation in R is must greater. For instance, for C1 of 10%, $(ABS(R_{(C1+5\%)}-R_{(C1-5\%)}) / R_{(C1)})$ is about 40%, and is about 180 % for C1 of 5%. In consequence, the obtained emission ratio is highly sensitive to the exact concentration of donor relative to the total of donor and acceptor, and a small variation in the donor concentration leads to a great change in the emission ratio R. This can be exploited for authentication purposes, as a counterfeiter would not only have to find out the exact dyes used as donor and acceptor, but would first of all have to realize that the emission ratio is at all used for authentication purposes, and would then secondly have to mimic the emission ratio exactly by also reproducing the relative amounts of donor and acceptor that determine R.

This sensitivity in the emission ratio R can thus also be used for easily modifying the ink and the authentication mark, respectively, in case that the ink or authentication mark originally used has been compromised, stolen or successfully reproduced. The manufacturer of the genuine product can then easily change R by a slight variation in the relative amount of donor (i.e. mass of donor/(mass of donor + mass of acceptor dye)). The overall impression to an unaided observer (e.g. with the unaided eye under normal viewing conditions, such as daylight or an incandescent lamp) may be the same or highly similar, but the significant difference in R can easily be detected by illumination under two different illumination conditions comprising radiation within the wavelength ranges $\lambda_{1a}$ and $\lambda_{2a}$, respectively, and observing the obtained emission in the wavelength range $\lambda_{2a}$ and calculating R therefrom. A manufacturer of an authentic article may thus react to a counterfeiter within a short period of time, e.g. hours or days, by changing the concentration of donor C1 and the corresponding authentication rules based on the ratio R.

In another embodiment, a differently expressed sensitivity criterion that is functionally the same as (A) is satisfied by the ink and the authentication mark of the present invention, which is expressed by the formula (B):

$$(ABS(R(C1)-R(C1+10\%)) / R(C1)) > 0.05$$

or

$$100*(ABS(R(C1)-R(C1+10\%)) / R(C1)) > 5(\%) \qquad \text{Formula (B)}$$

Herein, R, C1 and ABS are defined in the same manner as described above for Formula (A). This formula describes that an increase in the relative donor concentration C1 (by weight), of 10 % leads to a relative variation in the emission ratio R of more than 5%. This formula can also be determined for concentrations C1 of less than 5%,.

Formula B expresses that a variation in the donor mass relative to the total mass of donor and acceptor of 10% leads to a relative variation in the emission ratio that is greater than 5%. This is for instance obtained for relative amounts of donor of less than 20% in Figure 6b. As can be seen from Figure 6b, at smaller relative amounts of donor, the variation in R is greater. For instance, for C1 of 10%, $(ABS(R_{(C1+10\%)}-R_{(C1)}) / R_{(C1)})$ is about 14%, and is about 32 % for C1 of 5%. As a consequence, the obtained emission ratio is highly sensitive to the exact concentration of donor relative to the total of donor and acceptor, and a small variation in the donor concentration leads to a great change in the emission ratio R.

In one embodiment, the ink and the authentication mark of the present invention satisfies only one of the formula (A) and (B). In another embodiment, Formula (A) and (B) are satisfied simultaneously.

The present invention further provides, in one embodiment, an ink set comprising two or more of the inks described above, each of the inks satisfying the expression of formula (A) of $(ABS(R_{(C1+5\%)}-R_{(C1-5\%)}) / R_{(C1)}) >0.05$ and/or of formula (B) $(ABS(R(C1)-R(C1+10\%)) / R(C1)) >0.05$.

The inks preferably comprise or consist of the same components (in different absolute or relative amounts) and provide the same general impression when printed to an unaided observer, but provide for different R. In one embodiment, the inks are identical except for the relative amounts of donor and acceptor dye, to provide different R.

As outlined above, in one embodiment of the invention, the concentration of the donor is the concentration C1 wherein the expression of formula (A), i.e. $(ABS(R_{(C1+5\%)}-R_{(C1-5\%)}) / R_{(C1)}) >0.05$, is satisfied. Preferably, the concentration is such that $(ABS(R_{(C1+5\%)}-R_{(C1-5\%)}) / R_{(C1)})$ is greater than 10%, more preferably greater than 30%, further preferably greater than 50%.

In another embodiment, alternatively or additionally the concentration of the donor is the concentration C1 wherein the expression of formula (B), i.e. $(ABS(R(C1)-R(C1+10\%)) / R(C1)) >0.05$, is satisfied. Preferably, the concentration C1 is such that $(ABS(R(C1)-R(C1+10\%)) / R(C1))$ is greater than 10%, more preferably greater than 30%, further preferably greater than 50%.

It is self-evident that in case that formula (A) shall be satisfied, the relative concentration of the donor C1 can only be between 5% and 95% by weight, as otherwise the emission intensities at C1+ 5% and C1-5% cannot be determined. If formula (B) shall be satisfied, the concentration of the donor C1 can generally be between greater than zero (as for a concentration of zero no cascade effect occurs) and up to 90% or less, as for amounts of greater than 90% by weight the emission intensity at C1+10% cannot be determined.

In certain embodiments of the present invention the concentration of the donor dye is 50% by weight or less, expressed as (weight of donor dye/total weight of donor dye and acceptor dye). In these embodiments, preferably the requirements of formula (A) and/or (B) are met.

The present invention further provided an ink sets comprising two or more inks as described above. An ink set of this kind can be used in such a way that one initially uses one of the inks of the set for producing authentication marks until a predetermined condition is met, in order to then switch to using another ink from the set that has the same components but a different ratio of donor and acceptor and hence a different emission ratio R. The predetermined condition can be chosen in any suitable or desirable way e.g. can be the detection of an indication that the initial ink has been compromised. The condition can also be a recurring event, such as the lapse of a certain amount of time or the production of a certain number of authentication marks.

The present invention provides in one embodiment an ink set, comprising two or more inks according to any one of items 1 to 7 above, wherein preferably two or more of the two or more inks are inks having a concentration of the first dye C1 satisfying Formula (A) and/or Formula (B) as defined in above, and which only differ in relative and/or total amounts of first and second dye to give rise to different emission ratios R. Here, a difference in only the relative amounts means a variation in the relative amounts of first dye and second dye at the same total amount of first and second dye (e.g. 20% total dye content in the inks, i.e. total mass of first dye and second dye on the mass of the ink is 20%, with 8% of first dye and 12% of second dye in the first of the two or more inks (corresponding to a concentration C1 = 8/20 = 40%), and 5% of first dye and 15% of second dye in the second of the two or more inks), and a difference in only the total amounts means different total dye concentrations in the two inks at the same relative amounts (e.g. 5% of the first dye and 10% of the second dye in the first ink, and 10% of the first dye and 20% of the second dye in the second ink).

According to a preferred embodiment the ink set comprises n different inks that each produce their own distinctive emission ratio R, where each of the n inks is used for producing authentication marks associated with a corresponding batch of products. The ink and its associated signature or key R is thereby correlated with the associated batch, thus producing a further security mechanism, because even if a counterfeiter were to reproduce one of the inks of the set, it is improbable that all of the inks would be correctly reproduced, and this would become apparent from the mismatch of batch identification and emission ratio R.

The present invention also relates to the use of the printing ink of the invention for authenticating an article, and articles carrying an authenticating mark comprising the printing ink of the invention. The term "article" is to be understood in a broad sense and includes, but is not limited to, banknotes, value papers, identity documents, cards, tickets, labels, security foils, security threads, products and product packages.

For the purposes of the present invention, the term "at least one" means one or more, preferably one, two, three, four, five, six or seven, more preferably one, two, three, four, or five, even more preferably one, two, or three, and most preferably one or two.

If, in the present description, an embodiment, feature, aspect or mode of the invention is stated to be preferred, it should be understood that it is preferred to combine the same with other preferred embodiments, features, aspects or modes of the invention, unless there are evident incompatibilities. The resulting combinations of preferred embodiments, features, aspects or modes are part of the disclosure of the present description.

**EXAMPLE**

The following Example is given for illustrative purposes only, and the present invention is not limited to the Example.

To illustrate the cascade effect that allows tailoring excitation spectra, Lumogen® F Yellow 083 (BASF) (lum 1) and Lumogen® F Orange 240 (BASF) (lum 2) were employed. Their spectroscopic emission and excitation properties are shown in Figure 2 as measured on a Horiba Fluorolog-III spectrofluorometer.

The yellow dye (lum 1) acts as donor dye. Its emission spectrum shows two overlapping peaks at ca. 530 and 550 nm when excited at 480 nm. 530 nm is exactly one excitation peak of the orange dye (acting as acceptor dye, lum2) which emits at 580nm when excited at 530 nm.

In consequence, under e.g. 400 nm excitation, the orange dye alone will be little excited, as 400 nm is not within $\lambda_{2a}$ (intensity of emission $\sim 1 \times 10^7$). Conversely, if the orange acceptor dye is mixed with the yellow donor dye, the emission of the donor dye at 530 nm in the range $\lambda_{1e}$ (emitting 4 times higher as compared to the orange acceptor dye, at $\sim 4 \times 10^7$, when excited at 400nm) excites the orange dye, as $\lambda_{1e}$ (around 530 nm) overlaps with $\lambda_{2a}$, thus increasing the fluorescence. This provokes a change in the response under excitation at 400 nm which will be $\sim 4$ times higher which therefore constitutes a tailoring of the excitation.

The above demonstrates that by combining the donor dye and the acceptor dye, it is possible to obtain an excitation/emission behavior that cannot be achieved by a combination of fluorescent dyes wherein no cascade effects occurs, in particular for a specific combination of excitation wavelength outside $\lambda_{2a}$ and a detection within $\lambda_{2e}$.

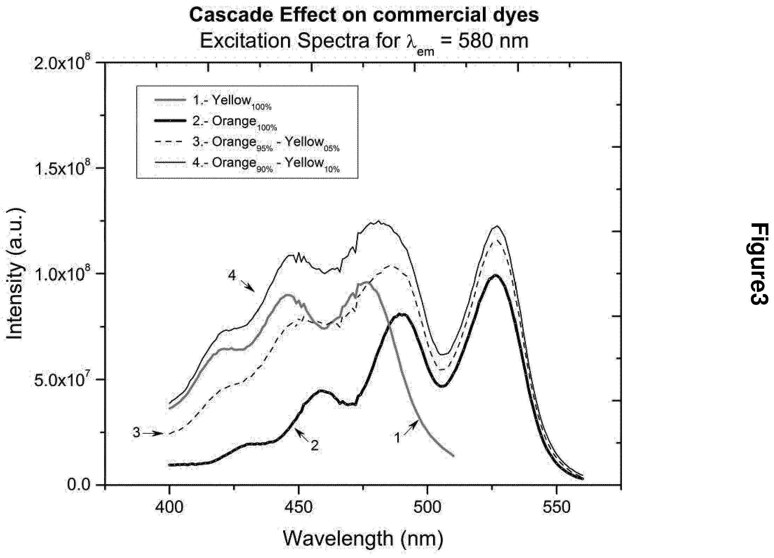

The experimental evidence demonstrating that the excitation spectrum of a luminescent mixture with emission measured at 580 nm can be tailored using different concentrations of the two dyes (Yellow and Orange) can be found in Figure 3.

As we can see in Figure 3, the addition of 5% Yellow to Orange dye changes significantly the intensity distribution of the excitation spectra recorded for an emission wavelength at 580 nm. However, it is also to be noted that the qualitative shape of the spectrum is dominated by the orange dye, thereby making the detection of the presence of yellow dye difficult for a counterfeiter.

Due to the cascade effect, also the emission spectra of the composition including the yellow and orange dyes keep the shape of the orange, but with higher intensities due to the emission of the yellow at the excitation wavelengths of the orange.

Figure 4 demonstrates that the tailoring of the excitation spectra seen above is indeed produced by the cascade effect.

In this plot, the emission spectra obtained for Orange (acceptor) with 5% and 10% concentrations of Yellow (donor) are matching very well the shape of the Orange alone. If the cascade was not present, one would expect that the yellow dye generates an emission spectrum matching the one of yellow, characterized by a smooth profile without the peaky structure of the orange. However, one obtains the orange characteristic spectrum but with higher intensities, which confirms the cascade effect described. Furthermore, this shows that if a counterfeiter relies only on a mostly quantitative analysis of the emission spectrum, he would probably not detect the presence of the yellow dye and certainly not the precise amount of the yellow dye in the ink.

**Authenticating method and system**

Generally the excitation wavelengths will be in the ranges $\lambda_{1a}$, $\lambda_{2a}$ but it should be noted that the one or more excitation wavelengths used to excite the donor dye do not have to include the excitation maximum of the donor. In order to make the analysis of the printing ink for the counterfeiter more difficult, it can be rather of advantage to excite the donor dye with one or more wavelengths that do not include the excitation maximum.

In accordance with an embodiment of the present invention, printing ink of any of the previously described embodiments is used for forming an authentication mark on an article. The printing can be done in any suitable and desirable way that makes use of the ink, e.g. by ink-jet printing, intaglio, letterpress etc. Consequently, an article carrying such an authentication mark also constitutes an embodiment of the present invention. The articles for receiving a mark can be chosen in any suitable and desirable way, e.g. be commercial articles for sale, such as bottles (where the mark may be printed on the bottle itself or a label attached to a bottle) or packaging for goods that are to be authenticated, like tobacco products, alcoholic beverages, perfume or the like, but also value articles like postage stamps, bank notes or similar value documents.

A basic embodiment of an authentication method comprises irradiating the authenticating mark present on the article with electromagnetic radiation falling in the wavelength range $\lambda_{1a}$ to cause excitation of the first fluorescent dye, and detecting the presence or absence of emission in the wavelength range $\lambda_{2e}$. The decision of whether or not there is emission in the wavelength range $\lambda_{2e}$ can be made in any suitable or desirable way, e.g. by detecting the level of radiation in the wavelength range $\lambda_{2e}$ and comparing a measure of the detected level (e.g. the average level) with a predetermined threshold, where presence is decided if the level exceeds the threshold.

Fig. 12 shows a flow chart of another authenticating method embodiment of the invention. In a first step S12-1 the mark is irradiated with electromagnetic radiation falling within the excitation wavelength range $\lambda_{1a}$ of the first fluorescent dye. Step S12-2 comprises detecting an electromagnetic radiation emission response from the mark. In step S12-3 a decision process is conducted for deciding whether the electromagnetic radiation emission response fulfils a criterion associated with presence of both the first and second fluorescent dye. If the criterion is fulfilled, then the mark is determined to be authentic (S12-4) and otherwise it is determined to be inauthentic (S12-5).

Fig. 13 shows a schematic representation of a system for authenticating a mark on an article that was printed using the above described printing ink. The system comprises an electromagnetic source 13-1 for irradiating the mark 13-2 (provided on article 13-3) with electromagnetic radiation 13-4 falling at least within the excitation wavelength range $\lambda_{1a}$ of the first fluorescent dye. A detector 13-5 is provided for detecting an electromagnetic radiation response 13-6 from the mark. A processor 13-7 is provided for receiving the detection information from the detector 13-5 and for performing a decision process for deciding whether the electromagnetic radiation response fulfils a criterion associated with presence of both the first and the second fluorescent dye. The processor 13-7 is also arranged for determining the mark as being authentic if the decision process indicates that the mark 13-2 fulfils the criterion.

The criterion can be chosen in any suitable or desirable way. For example, it can consist in establishing whether or not there is presence of emission in the wavelength range $\lambda_{2e}$, as described before. However, preferably the irradiating step S12-1 and the electromagnetic source 13-1 are arranged in such a way that an irradiation spectrum (i.e. the distribution of electromagnetic radiation that is irradiated onto the mark) of predetermined shape $I(\lambda)$ is generated, and the criterion is associated with the predetermined shape $I(\lambda)$. In other words, the criterion depends on determining whether one or more predetermined characteristics are present in the electromagnetic radiation emission response from the mark 13-2, where the characteristics are associated with the specific irradiation spectrum $I(\lambda)$ applied to the mark 13-2. The characteristics can be defined in terms of any suitable parameter that can be determined from the electromagnetic radiation emission response, such as the signal strength at predetermined wavelength values, the integrated signal strength over a predetermined wavelength range, the change in signal strength over a predetermined wavelength range etc. The criterion can then be chosen in any suitable or desirable way by comparing the one or more of the characteristics with one or more predetermined conditions, e.g. a range condition, a threshold condition, etc.

The behavior of a mark in terms of the electromagnetic radiation emission response can be considered the "signature" of the mark, and this signature can be compared with a predetermined signature that is to be expected for an authentic mark, i.e. a mark that was printed with the two fluorescent dyes described previously. In other words, the criterion is chosen to establish whether or not a signature is authentic.

As already mentioned, the authentic signature depends on the shape $I(\lambda)$ of the irradiation spectrum. According to a preferred embodiment, the authentication method can be performed in such a way that at least two different irradiation spectra of different shapes $I_1(\lambda)$ and $I_2(\lambda)$ are generated by the electromagnetic irradiation source, and the criterion of step S12-3 is associated with the first and second shapes $I_1(\lambda)$ and $I_2(\lambda)$. In other words, the authentication comprises testing whether not only one predetermined signature related to a corresponding irradiation spectrum is present, but also if a second different signature is present that is related to a corresponding different irradiation spectrum. In this way, the authentication reliability is increased, as even if a counterfeiter is able to compose an ink that can mimic the behavior of the authentic ink for one irradiation spectrum, it is very difficult to compose an ink that will again mimic the authentic for a different irradiation shape, unless the actual ink composition is determined. However, a full and detailed analysis of the authentic printing ink is cumbersome and costly, and the necessity for such an analysis therefore acts as a deterrent for counterfeiters and forgers.

The shape $I(\lambda)$ of the spectrum will generally be such that it comprises N peaks, N being an integer of at least one. Preferably, the spectrum has two or more peaks.

The sources comprised in element 13-1 and used in step S12-1 can be chosen in any suitable or desirable way and may comprise one or more of light-emitting diodes, lasers, fluorescent tubes, arc lamps and incandescent lamps. Preferably, electromagnetic sources that emit at distinct and mutually different wavelengths are chosen, and where the irradiating step S12-1 comprises successively operating individual ones of a plurality of these sources of electromagnetic radiation that each emit at different wavelengths. For example, a set of different LEDs may be used, each emitting a predetermined spectrum different from an LED of different kind. In this way the predetermined irradiation shape $I(\lambda)$ mentioned above can be generated as a sum of the spectra specific to the individual sources.

The step S12-2 of detecting the electromagnetic radiation emission response from the mark can be performed by having a user or a programmed machine hold the mark before a reception window of a detector in a predetermined way. Equally, it may comprise a process of imaging the article and identifying a region of interest in the image, said region of interest comprising the mark, e.g. a predetermined type of code. Such processes are known in the art and are therefore not described in more detail here. The step S12-2 of detecting the electromagnetic radiation emission response can be performed using any suitable radiation detection device, e.g. a diode or an array of diodes sensitive to electromagnetic radiation. According to a preferred embodiment, the detector 13-5 comprises an imager that outputs intensity values for a set of pixels. According to a further embodiment, the detector comprises only one imager.

The step S12-2 furthermore preferably comprises tuning the detector 13-5 to the emission wavelength range $\lambda_{2e}$ of the acceptor dye, preferably such that one or more of the fluorescent emission peaks of the acceptor dye can pass. This can e.g. be achieved by introducing a corresponding electromagnetic radiation filter into the detector, e.g. a filter with a pass band that overlaps with the emission wavelength range $\lambda_{2e}$ and is placed within the optical path. Preferably, the pass band of the filter includes one or more of the fluorescent emission peaks of the acceptor dye.

By virtue of the fact that the donor and acceptor dye interact to transfer energy from the donor to the acceptor, it is possible to simplify the detector arrangement in comparison with a system that would be used for normal fluorescent dye mixtures. Namely, as the donor can excite the acceptor dye when the ink is irradiated with electromagnetic radiation in the excitation wavelength range $\lambda_{1a}$ of the donor, it is not necessary to observe the ink at two emission wavelengths, because all radiation reactions can be observed in the emission wavelength range $\lambda_{2e}$ of the acceptor. Expressed differently, if for comparison an ink would be considered that includes two independently fluorescing dyes, then testing the behavior would require irradiating the ink in wavelength ranges that include each individual excitation range of the two dyes and observing the reaction at the two different emission wavelength ranges of the two dyes. Consequently, an authentication system for using such inks is complicated in that it requires different detectors for different emission wavelength ranges. In contrast thereto, by using an ink of the present invention, a simplified authentication system structure is possible as one can observe in a single emission wavelength range, despite using two different fluorescent dyes in the ink.

Thus, according to a further embodiment of the invention the decision process S12-3 comprises evaluating a level of the electromagnetic radiation emission response within the emission wavelength range $\lambda_{2e}$ of the acceptor dye when the mark is irradiated with electromagnetic radiation falling within the excitation wavelength range $\lambda_{1a}$ of the donor dye. According to a preferred embodiment, the decision process S12-3 furthermore comprises evaluating a level of the electromagnetic radiation emission response within the emission wavelength range $\lambda_{2e}$ of the acceptor dye when the mark is irradiated with electromagnetic radiation not falling within the excitation wavelength range $\lambda_{1a}$ of the donor dye, where the criterion of decision step S12-3 takes into account a relationship between said evaluated levels. The relationship is preferably the ratio of the evaluated levels, but other linear or non-linear relationships are also exploitable. The irradiation with electromagnetic radiation not falling within the excitation wavelength range $\lambda_{1a}$ of the donor dye can e.g. be done with electromagnetic radiation falling within the excitation wavelength range $\lambda_{2a}$ of the acceptor dye. The measuring of a relative relationship between the level of reaction to two different excitation wavelengths being irradiated is that the response or signature of the mark becomes insensitive to the absolute concentration of the two dyes in the ink, and equally effects of ageing, both in the ink and the detector, as well as problems of calibration in the detector, all become irrelevant for the authentication.

According to a further embodiment, the method further may comprise a step of not only irradiating the mark with electromagnetic radiation falling in the wavelength range λ1a, but also irradiating the authenticating mark with electromagnetic radiation falling in the wavelength range λ2a and observing the emission in the wavelength range λ2e caused thereby. The criterion in step S12-3 may the take into account the relationship between the emissions in the wavelength range λ2e observed upon irradiation in the wavelength range λ1a and upon irradiation in the wavelength range λ2a. For example, the emissions in the wavelength range λ2e upon irradiation in the wavelength ranges λ1a and λ2a can be utilized to calculate a light emission ratio R as defined above, and the criterion may take into account said light emission ratio R in any suitable or desirable way, e.g. the criterion can be defined as requiring that the measured value of R agrees with a predetermined value R of an authentic ink within a predefined tolerance.

The schematic illustration of the authentication system in Fig. 13 showed the electromagnetic source 13-1 as being separate from the detector 13-5 and the processor 13-7. However, it is equally well possible to provide the source 13-1, the detector 13-5 and the processor 13-7 in one unit.

Furthermore, it is preferable that the system comprises an output 13-8 for giving a user an indication of the authentication decision. For example, the output can comprise one or both of a display giving a visible indication (e.g. green indication for authentic, red indication for inauthentic) and an audio output giving an audible indication.

The processor 13-7 can be provided in any suitable or desirable way for the decision task and the task of determining authenticity. As such, the processor can be embodied by a data processing device with a data processor and a data memory, where said data memory holds software executable by said data processor for providing the indicated functionalities. However, the processor can also be provided by dedicated hardware, or a mixture of hardware and software.

Preferably, the authentication system comprises a portable device that contains a data processor and a camera, wherein the camera, which comprises an imager, forms part of the detector 13-5, and the data processor forms part of the processor 13-7.

**Detailed Examples**

The following detailed Examples of an authentication are given for illustrative purposes only, and the present invention is not limited to the Example.

The mark to be analyzed may be a code, e.g. a one-dimensional bar code, or as displayed in Figures 7-9 a two-dimensional bar code. Using a device which (a) images a printed mark in the range 580 nm +/- 10 nm (e.g. using a band-pass filter), and (b) which excites the sample with the same optical power of laser light at 445 nm (dark blue), 475 nm (light blue) and 525 (green), then by imaging the marks printed with the dyes mixtures discussed in the ink Example above (Orange 100%, 95% Orange with 5% Yellow and 90% Orange with 10% Yellow) with the three excitation wavelengths, we obtained pixel intensities proportional to the convolution of the excitation spectra and the discrete wavelengths aforementioned (due to the laser narrow spectral bandwidth).

A methodology to authenticate/discriminate the inks may be based on the following steps:

- Choose the image among the ones imaged that displays the strongest emission (in this example the one imaged under green light)

- Apply an algorithm to detect the brightest points in the image, e.g. any threshold algorithm like Otsu or any other suitable feature finder algorithm, if it is desired to detect a specific pattern. Also, any known algorithm from literature that is used to separate foreground and background may be used. The brightest points will correspond to the code and therefore to the ink to be authenticated.

- The region of interest containing the ink is extracted from image information. Then, the coordinates of the bounding box that covers the code can be computed.

- A mask corresponding to the region of interest, e.g. based on the coordinates of the bounding box, is applied on all the images captured. Then the corresponding ink statistics are extracted from the captured images. For example, the average ink response under the three excitations can be computed. One can obtain the three values: AverageDot_Excitation_DarkBlue, AverageDot_Excitation_LightBlue, and AverageDot_Excitation_Green. The ratios of these values can be used to differentiate between genuine and fake inks.

The aspect of codes printed with the discussed dyes under dark blue, light blue and green excitation is as shown in Figures 7 - 9, where Figure 7 shows a code printed with 100% Orange ink imaged at 580 nm +/- 10 nm under Dark Blue (445 nm) excitation (Left), Light Blue (475 nm) excitation (Centre) and Green (525 nm) excitation (Right), Figure 8 shows code printed with 95% Orange and 5% Yellow ink imaged at 580 nm +/- 10 nm under Dark Blue (445 nm) excitation (Left), Light Blue (475 nm) excitation (Centre) and Green (525 nm) excitation (Right), and Figure 9 shows code printed with 90% Orange and 10% Yellow ink imaged at 580 nm +/- 10 nm under Dark Blue (445 nm) excitation (Left), Light Blue (475 nm) excitation (Centre) and Green (525 nm) excitation (Right).

Fig. 10 shows the intensity of emission at 580 nm for each mark at each monochromatic excitation wavelength as a bar chart built by applying the algorithm suggested above to identify bright structures and analyze statistically those structures under the different excitations.

As can be seen, the intensity measured at 580 nm for excitation 445 nm is increased by adding yellow dye, whereas the one at 525 nm only does so to a lesser extent.

Fig. 11 shows bar charts representing the expected response ratio for the excitations available, which gives an example of a criterion for an authentication method based on the ratio of the intensities obtained at different excitations.

The bar charts represented in Fig. 11 show that the excitation spectra, characterized with the methodology described here by ratios 3.9, 2.2 and 1.8 (for Green / DarkBlue, Green / LightBlue and LightBlue / DarkBlue, respectively) can be substantially modified by the cascade effect induced with the presence of 5% or 10% yellow, so that the ratios are reduced to 1.5, 1.2, 1.2 for 5% yellow concentration and 1.1, 0.9, 1.1 for 10% yellow concentration.

These results illustrate well that a set of rules (as an example of a criterion) based on the ratios aforementioned which authenticate Orange 100% ink (for instance: Green / Dark Blue ratio in the range 3.5 to 4.5 and Green / Light Blue and Light / Blue to Dark Blue ratios in the range 1.5 to 2.5) would exclude the tailored inks with 5% or 10% yellow, thus enabling ink discrimination.

According to another example, which uses an imager and comprises identifying a mark or a region of interest containing the mark in an image generated by an imager, one can use three LED excitations to obtain three successive images resulting from respective sequential illuminations in Violet (405 mn), Green (530 nm) and Yellow (580 nm) of a mark printed with an ink including fluorescent pigments fluorescing around 660 nm and one may analyze each image within the spectral band 620-700 nm.

More precisely, after a preliminary calibration operation, for each acquired image one finds (e.g. by means of erosion and feature finder algorithms, known in the art) a positioning pattern (here dots) for determining a region of interest (or mask) on the image. Finding a region of interest (e.g. detecting brightest zones or points in an image) can be performed with any one of various well known image processing algorithms, like Otsu, an Erosion algorithm etc... Having identified the region of interest, one may analyze only local emissions from this region of interest in the images resulting from respective Violet, Green and Yellow illuminations within the spectral band 620-700 nm.

For each image, acquired pixel intensities from the region of interest can be averaged over the region of interest to obtain average response intensities (e.g. from bimodal histograms). A signature of the ink within the region of interest is then calculated based on the obtained three average intensities $I_V$, $I_G$ and $I_Y$. For example, one may use intensity ratios to create a vector ($I_V / I_G$, $I_V / I_Y$, $I_G / I_Y$) which can be used as a signature of the ink. A reference vector, with given tolerance values for each component, can serve to authenticate an ink: the ink being genuine if a vector resulting from imaging an actual mark under test matches (within tolerance values) the reference vector. Alternatively, some (scalar) value(s) calculated from the components of the vector can serve to authenticate the ink.

Many variants are possible for obtaining a signature (e.g. obtaining some relations between the mean intensities, which possibly better characterize the ink composition): for example, one can measure intensities in sub-regions of the region of interest (obtained by respective masking operations), or calculate the difference between mean pixel intensity I and background mean intensity $I_{BG}$ (gap ratio) to form ($I_V$-$I_{BGV}$)/($I_G$-$I_{BGG}$), ($I_V$-$I_{BGV}$)/($I_Y$-$I_{BGY}$) and ($I_G$-$I_{BGG}$)/($I_Y$-$I_{BGY}$). In this latter case, each gap ratio can be associated with one of the three axes of a coordinate system of a 3D (Euclidian) space and then, for a given ink, experimental values can be obtained for these gap ratios from various imaging sequences and (statistical) results can be used to obtain an axis in this 3D space around which the measures are concentrated. Within a given tolerance value for each gap ratio, this axis can serve for authenticating an ink: if the measured gap ratios are close to the axis and deviate from the axis only within said tolerance values, then the ink is considered as genuine.

It is also possible to use spherical coordinates system in the aforementioned 3D space and define tolerance values based on spherical coordinates.

Also, the concept of the present invention can be used to authenticate multi-ink markings, i.e. markings having a plurality of zones, each specific zone being marked with a given ink: then, a plurality of regions of interest (corresponding to different zones) can be used for extracting mean pixel intensities resulting from various illuminations and forming a signature for each ink.

It is also possible to select only one image for determining the region of interest (for example, in case of Violet, Green and Yellow illuminations, selecting the image resulting from Violet illumination if the ink has a stronger response under illumination with Violet light, so has to have the image with better contrast), and use this very region of interest for each subsequent image (i.e. under Green and Yellow) to extract the pixel intensities from the region of interest.

**Claims**

1. Printing ink comprising a first fluorescent dye acting as donor and a second fluorescent dye acting as acceptor, wherein said first fluorescent dye, upon excitation by electromagnetic radiation falling within an excitation wavelength range $\lambda_{1a}$ of the first fluorescent dye, is capable of emitting electromagnetic radiation in at least one first emission wavelength range $\lambda_{1e}$, said first emission wavelength range $\lambda_{1e}$ of the first fluorescent dye overlapping with at least one excitation wavelength range $\lambda_{2a}$ of the second fluorescent dye, to thereby excite the second fluorescent dye to emit electromagnetic radiation in a second emission wavelength range $\lambda_{2e}$,

   wherein $\lambda_{1a\text{-}max} < \lambda_{1e\text{-}max} < \lambda_{2a\text{-}max} < \lambda_{2e\text{-}max}$, wherein $\lambda_{1a\text{-}max}$ $\lambda_{1e\text{-}max}$, $\lambda_{2a\text{-}max}$, and $\lambda_{2e\text{-}max}$ denote the wavelengths of the excitation and emission peaks in the respective excitation and emission wavelength ranges of the first and second fluorescent dye,

   wherein the first fluorescent dye acting as a donor is present in a relative concentration C1, expressed as (mass of first dye/(total mass of first dye and second dye)), that satisfies formula (A) and/or (B)

$$(ABS(R_{(C1+5\%)}\text{-}R_{(C1\text{-}5\%)}) \,/\, R_{(C1)}) > 0.05. \qquad \text{Formula (A)}$$

$$(ABS(R_{(C1)}\text{-}R_{(C1+10\%)}) \,/\, R_{(C1)}) > 0.05 \qquad \text{Formula (B)}$$

   wherein R denotes the light emission ratio, defined as (emission in the wavelength range $\lambda_{2e}$ upon irradiation in the wavelength range $\lambda_{2a}$ /emission in the wavelength range $\lambda_{2e}$ upon irradiation in the wavelength range $\lambda_{1a}$) observed at the concentration C1+5%, C1-5% or C1, C1+10%, respectively, and
   ABS denotes the absolute value of the difference in the light emission ratios observed at the concentrations C1+5%, C1-5%, C1 and C1+10%, respectively.

2. Printing ink according to claim 1, wherein the second emission wavelength range $\lambda_{2e}$ does not overlap with the first emission wavelength range $\lambda_{1e}$.

3. Use of the printing ink according to any of claims 1 to 2 for forming an authentication mark on an article.

4. Ink set, comprising two or more inks according to any one of claims 1 to 2, wherein two or more of the two or more inks are inks having a concentration of the first dye C1 satisfying Formula (A) and/or Formula (B) as defined in claim 1, and which only differ in one or both of relative and total amounts of first and second dye to give rise to different emission ratios R.

5. Article carrying an authenticating mark formed with a printing ink according to any of claims 1 to 2.

6. Authentication method, comprising irradiating an authentication mark obtained by the use according to claim 3 or an authenticating mark present on the article according to claim 5 with electromagnetic radiation falling in the wavelength range $\lambda_{1a}$ to cause excitation of the first fluorescent dye, and detecting the presence or absence of emission in the wavelength range $\lambda_{2e}$.

7. A method of authenticating a mark, said mark having been printed using the printing ink according to any of claims 1 to 2, comprising:

- irradiating said mark with electromagnetic radiation falling within the excitation wavelength range $\lambda_{1a}$ of the first fluorescent dye;
- detecting an electromagnetic radiation emission response from said mark;
- performing a decision process for deciding whether the electromagnetic radiation emission response fulfils an authentication criterion associated with presence of both said first and said second fluorescent dye in a predetermined relative concentration of the dyes, and
- determining said mark as being authentic if said decision process indicates that said mark fulfils said criterion.

8. The method of claim 7, wherein said irradiating comprises generating an irradiation spectrum of predetermined shape and said authentication criterion is associated with said predetermined shape.

9. The method of one of claims 7 to 8, wherein said irradiating comprises generating at least a first spectrum of predetermined first shape and a second spectrum of predetermined second shape, said first shape being different from said second shape, and said authentication criterion is associated with said predetermined first and second shapes.

10. The method of one of claims 7 to 9, wherein said decision process comprises evaluating a level of said electromagnetic radiation emission response within said second emission wavelength range $\lambda_{2e}$ when said mark is irradiated with electromagnetic radiation falling within the excitation wavelength range $\lambda_{1a}$ of the first fluorescent dye.

11. The method of claim 10, wherein said decision process furthermore comprises evaluating a level of said electromagnetic radiation emission response within said second emission wavelength range $\lambda_{2e}$ when said mark is irradiated with electromagnetic radiation not falling within the excitation wavelength range $\lambda_{1a}$ of the first fluorescent dye, where said authentication criterion takes into account a relationship between said evaluated levels.

12. The method according to any one of claims 7 to 11, wherein the method further comprises a step of irradiating the authenticating mark with electromagnetic radiation falling in the wavelength range $\lambda_{2a}$ and observing the emission in the wavelength range $\lambda_{2e}$ caused thereby, and where said authentication criterion takes into account the relationship between the emissions in the wavelength range $\lambda_{2e}$ observed upon irradiation in the wavelength range $\lambda_{1a}$ and upon irradiation in the wavelength range $\lambda_{2a}$.

13. The method according to claim 12, wherein the emissions in the wavelength range $\lambda_{2e}$ upon irradiation in the wavelength ranges $\lambda_{1a}$ and $\lambda_{2a}$ are utilized to calculate a light emission ratio R defined as (emission in the wavelength range $\lambda_{2e}$ upon irradiation in the wavelength range $\lambda_{2a}$/emission in the wavelength range $\lambda_{2e}$ upon irradiation in the wavelength range $\lambda_{1a}$) and said authentication criterion takes into account said light emission ratio R.

14. A system for authenticating a mark on an article, said mark having been printed using the printing ink according to any of claims 1 to 2, comprising:

an electromagnetic source for irradiating said mark with electromagnetic radiation falling at least within the excitation wavelength range $\lambda_{1a}$ of the first fluorescent dye;
a detector for detecting an electromagnetic radiation emission response from said mark;
a processor for performing a decision process for deciding whether the electromagnetic radiation emission response fulfils an authentication criterion associated with presence of both said first and said second fluorescent dye, and for determining said mark as being authentic if said decision process indicates that said mark fulfils said authentication criterion.

**Patentansprüche**

1. Tinte zum Drucken, umfassend einen ersten Fluoreszenzfarbstoff, der als Donor wirkt, und einen zweiten Fluoreszenzfarbstoff, der als Akzeptor wirkt, wobei der erste genannte Fluoreszenzfarbstoff nach Anregung durch elektromagnetische Strahlung, die innerhalb eines Anregungswellenlängenbereiches $\lambda_{1a}$ des ersten Fluoreszenzfarbstoffs liegt, fähig ist, elektromagnetische Strahlung in mindestens einem ersten Emissionswellenlängenbereich $\lambda_{1e}$ zu emittieren, wobei der erste genannte Emissionswellenlängenbereich $\lambda_{1e}$ des ersten Fluoreszenzfarbstoffs mit mindestens einem Anregungswellenlängenbereich $\lambda_{2a}$ des zweiten Fluoreszenzfarbstoffs überlappt, um dadurch den zweiten Fluoreszenzfarbstoff zur Emission elektromagnetischer Strahlung in einem zweiten Emissionswellenlängenbereich $\lambda_{2e}$ anzuregen,

wobei $\lambda_{1a\text{-}max} < \lambda_{1e\text{-}max} < \lambda_{2a\text{-}max} < \lambda_{2e\text{-}max}$, Wobei $\lambda_{1a\text{-}max}$, $\lambda_{1e\text{-}max}$, $\lambda_{2a\text{-}max}$, und $\lambda_{2e\text{-}max}$ die Wellenlängen der Anregungs- und Emissionspeaks in den jeweiligen Anregungs- und Emissionswellenlängenbereichen des ersten und zweiten Fluoreszenzfarbstoffs bezeichnen,

wobei der erste als Donor wirkende Fluoreszenzfarbstoff in einer relativen Konzentration C1, ausgedrückt als (Masse des ersten Farbstoffs/(Gesamtmasse des ersten Farbstoffs und des zweiten Farbstoffs)), vorhanden ist, die der Formel (A) und/oder (B) entspricht

$$(\mathrm{ABS}(\mathrm{R}_{(C1+5\%)}-\mathrm{R}_{(C1-5\%)}) / \mathrm{R}_{(C1)}) > 0{,}05 \qquad \text{Formel (A)}$$

$$(\mathrm{ABS}(\mathrm{R}_{(C1)}-\mathrm{R}_{(C1+10\%)}) / \mathrm{R}_{(C1)}) > 0{,}05 \qquad \text{Formel (B)}$$

wobei R das Lichtemissionsverhältnis bezeichnet, definiert als (Emission im Wellenlängenbereich $\lambda_{2e}$ nach der Bestrahlung im Wellenlängenbereich $\lambda_{2a}$ /Emission im Wellenlängenbereich $\lambda_{2e}$ nach der Bestrahlung im Wellenlängenbereich $\lambda_{1a}$), beobachtet bei der Konzentration von jeweils C1+5%, C1-5% oder C1, C1+10%, und ABS den absoluten Wert der Differenz der Lichtemissionsverhältnisse bezeichnet, die bei den Konzentrationen von jeweils C1+5%, C1-5%, C1 und C1+10% beobachtet werden.

2. Tinte zum Drucken nach Anspruch 1, wobei der zweite Emissionswellenlängenbereich $\lambda_{2e}$ mit dem ersten Emissionswellenlängenbereich $\lambda_{1e}$ nicht überlappt.

3. Verwendung der Tinte zum Drucken nach einem der Ansprüche 1 bis 2 zur Bildung einer Authentifizierungsmarkierung auf einem Artikel.

4. Tintensatz, umfassend zwei oder mehr Tinten nach einem der Ansprüche 1 bis 2, wobei zwei oder mehr der zwei oder mehr Tinten Tinten mit einer Konzentration des ersten Farbstoffs C1 sind, die der Formel (A) und/oder der Formel (B) nach Anspruch 1 entspricht, und die sich nur in einer oder beiden der Relativ- und Gesamtmengen des ersten und zweiten Farbstoffs unterscheiden, um unterschiedliche Emissionsverhältnisse R zu erzeugen.

5. Artikel, der eine Authentifizierungsmarkierung trägt, die mit einer Tinte zum Drucken nach einem der Ansprüche 1 bis 2 gebildet ist.

6. Authentifizierungsverfahren, umfassend die Bestrahlung einer Authentifizierungsmarkierung, die durch die Verwendung nach Anspruch 3 erhalten ist, oder einer auf dem Gegenstand vorhandenen Authentifizierungsmarkierung nach Anspruch 5 mit elektromagnetischer Strahlung, die innerhalb des Wellenlängenbereiches $\lambda_{1a}$ liegt, um die Anregung des ersten Fluoreszenzfarbstoffs zu bewirken, und die Detektion der Anwesenheit oder Abwesenheit von Emission im Wellenlängenbereich $\lambda_{2e}$.

7. Ein Verfahren zur Authentifizierung einer Markierung, wobei die genannte Markierung unter Verwendung der Tinte zum Drucken nach einem der Ansprüche 1 bis 2 gedruckt worden ist, umfassend:

   - die Bestrahlung der genannten Markierung mit elektromagnetischer Strahlung, die innerhalb des Anregungswellenlängenbereiches $\lambda_{1a}$ des ersten Fluoreszenzfarbstoffs liegt;
   - die Detektion einer Reaktion von der genannten Markierung auf die Emission elektromagnetischer Strahlung;
   - die Durchführung eines Entscheidungsprozesses zur Entscheidung, ob die Reaktion auf die Emission elektromagnetischer Strahlung ein Authentifizierungskriterium erfüllt, das mit der Anwesenheit sowohl des ersten als auch des zweiten Fluoreszenzfarbstoffs in einer vorbestimmten relativen Konzentration der Farbstoffe verbunden ist, und
   - die Bestimmung der genannten Markierung als authentisch, wenn der genannte Entscheidungsprozess zeigt, dass die Markierung das genannte Kriterium erfüllt.

8. Das Verfahren nach Anspruch 7, wobei die genannte Bestrahlung die Erzeugung eines Bestrahlungsspektrums mit einer vorbestimmten Form umfasst und das Authentifizierungskriterium mit der vorbestimmten Form verbunden ist.

9. Das Verfahren nach einem der Ansprüche 7 bis 8, wobei die genannte Bestrahlung die Erzeugung mindestens eines ersten Spektrums einer vorbestimmten ersten Form und eines zweiten Spektrums einer vorbestimmten zweiten Form umfasst, wobei die genannte erste Form von der genannten zweiten Form verschieden ist und das genannte Authentifizierungskriterium mit der genannten vorbestimmten ersten und zweiten Form verbunden ist.

10. Das Verfahren nach einem der Ansprüche 7 bis 9, wobei der Entscheidungsprozess die Bewertung eines Niveaus der genannten Reaktion auf die Emission elektromagnetischer Strahlung innerhalb des zweiten Emissionswellenlängenbereichs $\lambda_{2e}$ umfasst, wenn die genannte Markierung mit elektromagnetischer Strahlung bestrahlt wird, die innerhalb des Anregungswellenlängenbereich $\lambda_{1a}$ des ersten Fluoreszenzfarbstoffs liegt.

11. Das Verfahren nach Anspruch 10, wobei der Entscheidungsprozess ferner die Bewertung eines Niveaus der genannten Reaktion auf die Emission elektromagnetischer Strahlung innerhalb des zweiten Emissionswellenlängenbereichs $\lambda_{2e}$ umfasst, wenn die genannte Markierung mit elektromagnetischer Strahlung bestrahlt wird, die innerhalb des Anregungswellenlängenbereichs $\lambda_{1a}$ des ersten Fluoreszenzfarbstoffs nicht liegt, wobei das genannte Authentifizierungskriterium eine Beziehung zwischen den bewerteten Niveaus berücksichtigt.

12. Das Verfahren nach einem der Ansprüche 7 bis 11, wobei das Verfahren ferner einen Schritt der Bestrahlung der Authentifizierungsmarkierung mit elektromagnetischer Strahlung, die innerhalb des Wellenlängenbereiches $\lambda_{2a}$ liegt, und der Beobachtung der dadurch verursachten Emission im Wellenlängenbereich $\lambda_{2e}$ umfasst, und wobei das Authentifizierungskriterium die Beziehung zwischen den Emissionen im Wellenlängenbereich $\lambda_{2e}$, die nach der Bestrahlung im Wellenlängenbereich $\lambda_{1a}$ und nach der Bestrahlung im Wellenlängenbereich $\lambda_{2a}$ beobachtet werden, berücksichtigt.

13. Das Verfahren nach Anspruch 12, wobei die Emissionen im Wellenlängenbereich $\lambda_{2e}$ nach der Bestrahlung in den Wellenlängenbereichen $\lambda_{1a}$ und $\lambda_{2a}$ verwendet werden, um ein Lichtemissionsverhältnis R zu berechnen, das als (Emission im Wellenlängenbereich $\lambda_{2e}$ nach der Bestrahlung im Wellenlängenbereich $\lambda_{2a}$ /Emission im Wellenlängenbereich $\lambda_{2e}$ nach der Bestrahlung im Wellenlängenbereich $\lambda_{1a}$) definiert ist, und das genannte Authentifizierungskriterium das genannte Lichtemissionsverhältnis R berücksichtigt.

14. Ein System zur Authentifizierung einer Markierung auf einem Artikel, wobei die Markierung unter Verwendung der Tinte zum Drucken nach einem der Ansprüche 1 bis 2 gedruckt worden ist, umfassend:

   eine elektromagnetische Quelle zur Bestrahlung der genannten Markierung mit elektromagnetischer Strahlung, die mindestens innerhalb des Anregungswellenlängenbereiches $\lambda_{1a}$ des ersten Fluoreszenzfarbstoffs liegt;
   einen Detektor zur Detektion einer Reaktion von dieser Markierung auf die Emission elektromagnetischer Strahlung;
   einen Prozessor zur Durchführung eines Entscheidungsprozesses zur Entscheidung, ob die Reaktion auf die Emission elektromagnetischer Strahlung ein Authentifizierungskriterium erfüllt, das mit der Anwesenheit sowohl des ersten als auch des zweiten Fluoreszenzfarbstoffs verbunden ist, und zur Bestimmung der Markierung als authentisch, wenn der Entscheidungsprozess zeigt, dass die Markierung das Authentifizierungskriterium erfüllt.

**Revendications**

1. Encre d'impression comprenant un premier colorant fluorescent servant de donneur et un second colorant fluorescent servant d'accepteur,

   dans laquelle ledit premier colorant fluorescent, lors d'une excitation par un rayonnement électromagnétique se trouvant dans une plage de longueurs d'onde d'excitation $\lambda_{1a}$ du premier colorant fluorescent, est capable d'émettre un rayonnement électromagnétique dans au moins une première plage de longueurs d'onde d'émission $\lambda_{1e}$, ladite première plage de longueurs d'onde d'émission $\lambda_{1e}$ du premier colorant fluorescent chevauchant au moins une plage de longueurs d'onde d'excitation $\lambda_{2a}$ du second colorant fluorescent, pour ainsi exciter le second colorant fluorescent afin d'émettre un rayonnement électromagnétique dans une seconde plage de longueurs d'onde d'émission $\lambda_{2e}$,

   dans laquelle $\lambda_{1a\text{-}max} < \lambda_{1e\text{-}max} < \lambda_{2a\text{-}max} < \lambda_{2e\text{-}max}$, dans laquelle $\lambda_{1a\text{-}max}$, $\lambda_{1e\text{-}max}$, $\lambda_{2a\text{-}max}$, et $\lambda_{2e\text{-}max}$ désignent les longueurs d'onde de l'excitation et des pics d'émission dans les plages de longueur d'onde d'excitation et d'émission respectives des premier et second colorants fluorescents,

   dans laquelle le premier colorant fluorescent servant de donneur est présent dans une concentration relative C1, exprimée comme (masse du premier colorant/(masse totale du premier colorant et du second colorant)), qui satisfait les formules (A) et/ou (B)

$$(ABS(R_{(C1+5\,\%)} - R_{(C1-5\,\%)})/R_{(C1)}) > 0{,}05 \qquad \text{Formule (A)}$$

$$(ABS(R_{(C1)} - R_{(C1+10\,\%)})/R_{(C1)}) > 0{,}05 \qquad \text{Formule (B)}$$

dans lesquelles R désigne le rapport d'émission de lumière, défini comme (émission dans la plage de longueurs d'onde $\lambda_{2e}$ lors d'une irradiation dans la plage de longueurs d'onde $\lambda_{2a}$/émission dans la plage de longueurs d'onde $\lambda_{2e}$ lors d'une irradiation dans la plage de longueurs d'onde $\lambda_{1a}$) observé à la concentration C1 + 5 %, C1 - 5 % ou C1, C1 + 10 %, respectivement, et
ABS désigne la valeur absolue de la différence des rapports d'émission de lumière observés aux concentrations C1 + 5 %, C1 - 5 %, C1 et C1 + 10 %, respectivement.

**2.** Encre d'impression selon la revendication 1, dans laquelle la seconde plage de longueurs d'onde d'émission $\lambda_{2e}$ ne chevauche pas la première plage de longueurs d'onde d'émission $\lambda_{1e}$.

**3.** Utilisation de l'encre d'impression selon l'une quelconque des revendications 1 et 2 pour former une marque d'authentification sur un article.

**4.** Ensemble d'encres, comprenant deux encres selon l'une quelconque des revendications 1 et 2 ou plus, dans lequel deux ou plus des deux encres ou plus sont des encres ayant une concentration du premier colorant C1 satisfaisant la formule (A) et/ou la formule (B) telle que définie dans la revendication 1, et qui ne diffèrent que de l'une ou des deux de quantités relative et totale des premier et second colorants pour donner lieu à des rapports d'émission R différents.

**5.** Article porteur d'une marque d'authentification formée avec une encre d'impression selon l'une quelconque des revendications 1 et 2.

**6.** Procédé d'authentification, comprenant l'irradiation d'une marque d'authentification obtenue par l'utilisation selon la revendication 3 ou d'une marque d'authentification présente sur l'article selon la revendication 5 avec un rayonnement électromagnétique se trouvant dans la plage de longueurs d'onde $\lambda_{1a}$ pour provoquer l'excitation du premier colorant fluorescent, et la détection de la présence ou de l'absence d'émission dans la plage de longueurs d'onde $\lambda_{2e}$.

**7.** Procédé d'authentification d'une marque, ladite marque ayant été imprimée à l'aide de l'encre d'impression selon l'une quelconque des revendications 1 et 2, comprenant :

- l'irradiation de ladite marque avec un rayonnement électromagnétique se trouvant dans la plage de longueurs d'onde d'excitation $\lambda_{1a}$ du premier colorant fluorescent ;
- la détection d'une réponse d'émission de rayonnement électromagnétique en provenance de ladite marque ;
- la réalisation d'un processus de décision pour décider si la réponse d'émission de rayonnement électromagnétique satisfait un critère d'authentification associé à la présence de l'un ou des deux desdits premier et second colorants fluorescents dans une concentration relative prédéterminée des colorants, et
- la détermination de l'authenticité de ladite marque si ledit processus de décision indique que ladite marque satisfait ledit critère.

**8.** Procédé selon la revendication 7, dans lequel ladite irradiation comprend la génération d'un spectre d'irradiation de forme prédéterminée et ledit critère d'authentification est associé à ladite forme prédéterminée.

**9.** Procédé selon l'une des revendications 7 et 8, dans lequel ladite irradiation comprend la génération d'au moins un premier spectre de première forme prédéterminée et d'un second spectre de seconde forme prédéterminée, ladite première forme étant différente de ladite seconde forme, et ledit critère d'authentification est associé auxdites première et seconde formes prédéterminées.

**10.** Procédé selon l'une des revendications 7 à 9, dans lequel ledit processus de décision comprend l'évaluation d'un niveau de ladite réponse d'émission de rayonnement électromagnétique dans ladite seconde plage de longueurs d'onde d'émission $\lambda_{2e}$ lorsque ladite marque est irradiée avec un rayonnement électromagnétique se trouvant dans la plage de longueurs d'onde d'excitation $\lambda_{1a}$ du premier colorant fluorescent.

**11.** Procédé selon la revendication 10, dans lequel ledit processus de décision comprend en outre l'évaluation d'un niveau de ladite réponse d'émission de rayonnement électromagnétique dans ladite seconde plage de longueurs d'onde d'émission $\lambda_{2e}$ lorsque ladite marque est irradiée avec un rayonnement électromagnétique ne se trouvant pas dans la plage de longueurs d'onde d'excitation $\lambda_{1a}$ du premier colorant fluorescent, où ledit critère d'authentification tient compte d'une relation entre lesdits niveaux évalués.

**12.** Procédé selon l'une quelconque des revendications 7 à 11, dans lequel le procédé comprend en outre une étape consistant à irradier la marque d'authentification avec un rayonnement électromagnétique se trouvant dans la plage de longueurs d'onde $\lambda_{2a}$ et observer l'émission dans la plage de longueurs d'onde $\lambda_{2e}$ ainsi provoquée, et où ledit critère d'authentification tient compte de la relation entre les émissions dans la plage de longueurs d'onde $\lambda_{2e}$ observées lors d'une irradiation dans la plage de longueurs d'onde $\lambda_{1a}$ et lors d'une irradiation dans la plage de longueurs d'onde $\lambda_{2a}$.

**13.** Procédé selon la revendication 12, dans lequel les émissions dans la plage de longueurs d'onde $\lambda_{2e}$ lors d'une irradiation dans la plage de longueurs d'ondes $\lambda_{1a}$ et $\lambda_{2a}$ sont utilisées pour calculer un rapport d'émission de lumière R défini comme (émission dans la plage de longueurs d'onde $\lambda_{2e}$ lors d'une irradiation dans la plage de longueurs d'onde $\lambda_{2a}$/émission dans la plage de longueurs d'onde $\lambda_{2e}$ lors d'une irradiation dans la plage de longueurs d'onde $\lambda_{1a}$) et ledit critère d'authentification tient compte dudit rapport d'émission de lumière R.

**14.** Système pour authentifier une marque sur un article, ladite marque ayant été imprimée à l'aide de l'encre d'impression selon l'une quelconque des revendications 1 et 2, comprenant :

une source électromagnétique destinée à irradier ladite marque avec un rayonnement électromagnétique se trouvant au moins dans la plage de longueurs d'onde d'excitation $\lambda_{1a}$ du premier colorant fluorescent ;
un détecteur destiné à détecter une réponse d'émission de rayonnement électromagnétique en provenance de ladite marque ;
un processeur destiné à réaliser un processus de décision pour décider si la réponse d'émission de rayonnement électromagnétique satisfait un critère d'authentification associé à la présence des deux desdits premier et second colorants fluorescents, et déterminer l'authenticité de ladite marque si ledit processus de décision indique que ladite marque satisfait ledit critère d'authentification.

**Figure 1**

# Figure 2

# Figure3

Cascade Effect on commercial dyes
Excitation Spectra for $\lambda_{em}$ = 580 nm

Legend:
1.- Yellow$_{100\%}$
2.- Orange$_{100\%}$
3.- Orange$_{95\%}$ - Yellow$_{05\%}$
4.- Orange$_{90\%}$ - Yellow$_{10\%}$

Intensity (a.u.) vs Wavelength (nm)

# Figure 4

Emission spectra for $\lambda_{ex}$ = 400 nm

# Figure 5

**Figure 6a**

## Figure 6b

# Figure 7

# Figure 8

# Figure 9

# Figure 10

# Figure 11

# Figure 12

```
        ┌─────────────┐
        │    Start     │
        └──────┬──────┘
               │
               ▼
        ┌─────────────┐
        │ Irradiate mark │   S12-1
        │ in range $\lambda_{1a}$ │
        └──────┬──────┘
               │
               ▼
        ┌─────────────┐
        │   Detect     │
        │ response from │   S12-2
        │    mark      │
        └──────┬──────┘
               │
               ▼
  S12-3      ◇                  No
          Criterion ──────────────┐
          fulfilled?              │
               │                  │
              Yes                 │
               │                  │      S12-5
               ▼                  ▼
  S12-4  ┌──────────┐      ┌──────────────┐
         │ Authentic │      │  Inauthentic  │
         └─────┬────┘      └───────┬──────┘
               │                   │
               └─────────┬─────────┘
                         ▼
                   ┌──────────┐
                   │   End    │
                   └──────────┘
```

37

# Figure 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7079230 B2
- WO 2013050290 A1

- US 2005120907 A1

**Non-patent literature cited in the description**

- **D. L. ANDREWS.** A UNIFIED THEORY OF RADIATIVE AND RADIATIONLESS MOLECULAR ENERGY TRANSFER. *Chemical Physics,* 1989, vol. 135, 195-201

- **D.M. STURMER.** The Chemistry of Heterocyclic Compounds. John Wiley, 1977, vol. 30, 441-587
- **J.B. MARLING ; J.H. HAWLEY ; E.M. LISTON ; W.B. GRANT.** *Applied Optics,* 1974, vol. 13 (10), 2317